# EUROPEAN PATENT APPLICATION

(11) **EP 4 625 586 A1**
(43) Date of publication of application: **01.10.2025**
(21) Application number: 23925788.4
(22) Date of filing: 09.03.2023
(51) Int. Cl.: H01M 10/0567

(54) **ELECTROLYTE, BATTERY CONTAINING SAME, AND ELECTRIC DEVICE**

(71) Applicant: Contemporary Amperex Technology (Hong Kong) Limited, Hong Kong (HK)
(72) Inventor: PENG, Chang, Ningde, Fujian 352100 (CN); CHEN, Peipei, Ningde, Fujian 352100 (CN); HUANG, Yuming, Ningde, Fujian 352100 (CN); LI, Zepeng, Ningde, Fujian 352100 (CN); ZHENG, Xiu, Ningde, Fujian 352100 (CN)
(74) Representative: Ziebig Hengelhaupt Intellectual Property Attorneys Patentanwaltskanzlei PartGmbB
(86) International application number: PCT/CN2023/080576
(87) International publication number: WO 2024/183071

(57) **Abstract**

Embodiments of this application provide an electrolyte solution, a battery containing the same, and a power consuming apparatus. The electrolyte solution includes: a first additive, where the first additive includes at least one of a compound containing at least groups represented by formula (I) and formula (II), and a compound containing at least groups represented by formula (I) and formula (III). Cycle performance and storage life of the battery containing the electrolyte solution are both improved.

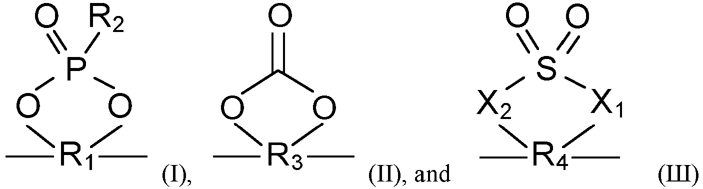

## Description

### TECHNICAL FIELD

This application relates to the technical field of batteries, and in particular, to an electrolyte solution, a battery containing the same, and a power consuming apparatus.

### BACKGROUND

In recent years, due to their high energy density and cycle performance, secondary batteries are widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace. With the great development and wide application of secondary batteries, higher requirements are posed on the cycle performance, storage life, and other performance of secondary batteries.

Therefore, how to improve the cycle performance and storage life of secondary batteries is an urgent technical problem to be solved.

### SUMMARY

Embodiments of this application provide an electrolyte solution, a battery containing the same, and a power consuming apparatus. Cycle performance and storage life of the battery containing the electrolyte solution are both improved.

According to a first aspect, an electrolyte solution is provided, including: a first additive, where the first additive includes at least one of a compound containing at least groups represented by formula (I) and formula (II), and a compound containing at least groups represented by formula (I) and formula (III):

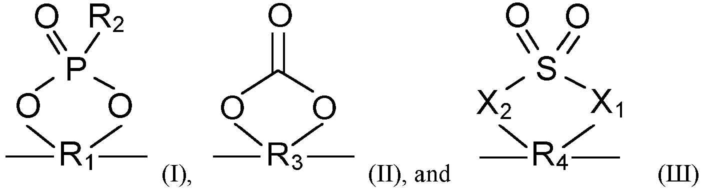

where R₁, R₃, and R₄ each independently include at least one of a saturated hydrocarbon group or an unsaturated hydrocarbon group, R₂ includes F, OLi, OCH₂CF₃, OCH₃, OCH₂CH₂=CH₂, OCH₂CH₂CH₂=CH₂, OSi(OCH₃)₃, OSi(OCH₂CH₂=CH₂)₃, or OSi(CH₂=CH₂)₃, X₁ and X₂ include O or CH₂, and X₁ and X₂ are not CH₂ simultaneously.

In the embodiments of this application, the electrolyte solution includes a first additive, where the first additive includes at least one of a compound containing at least groups represented by formula (I) and formula (II), and a compound containing at least groups represented by formula (I) and formula (III). That is, the first additive includes at least one of a compound containing both a cyclic phosphate structure and a cyclic carbonate structure, and a compound containing both a cyclic phosphate structure and a cyclic sulfate structure and/or a cyclic sulfonate structure. The first additive undergoes a copolymerization reaction at an electrode interface and participates in film forming at the formation stage of the battery. A formed copolymer has advantages of both a polycarbonate polymer and a polyphosphate polymer or both polyphosphate and polysulfate and/or polysulfonate. The crystallinity of the copolymer is reduced, the toughness of the formed interface film is improved, and the stability of the interface film is improved, thereby prolonging the storage life of the battery. In addition, the compound containing both a cyclic carbonate structure and a cyclic phosphate structure, or the compound containing both a cyclic phosphate structure and a cyclic sulfate structure and/or a cyclic sulfonate structure has a large molecular structure, a large steric hindrance, and a weak solvation ability. Therefore, the compound has low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery.

In a possible embodiment, a mass content of the first additive in the electrolyte solution is 0.0001% to 10%, and optionally, the mass content of the first additive in the electrolyte solution is 0.01% to 5%.

If the content of the first additive in the electrolyte solution is too low, no enough copolymer can be formed to participate in film forming, which affects the stability of the interface film, resulting in an unstable interface between the electrode plate and the electrolyte solution. If the content of the first additive in the electrolyte solution is too high, the viscosity of the electrolyte solution is too high, which affects the infiltration of the electrode plate by the electrolyte solution, and affects the charge and discharge performance of the battery.

In a possible embodiment, the first additive includes at least one of compounds represented by formula (IV), formula (V), formula (VI), and formula (VII): 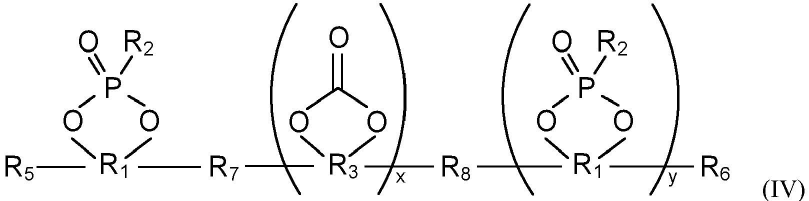 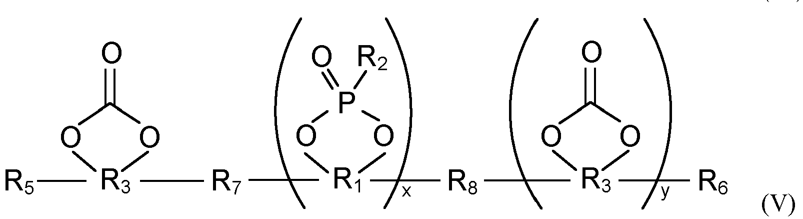 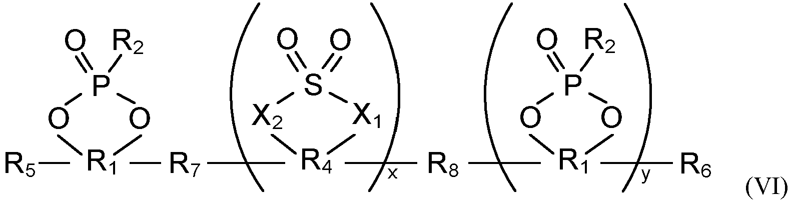 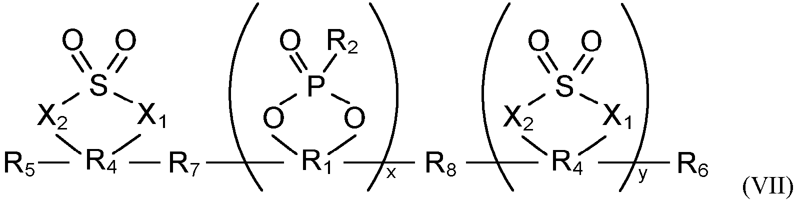 where R₅ and R₆ each independently include at least one of H, a halogen atom, a substituted hydrocarbon group or an unsubstituted hydrocarbon group, and a group containing an unsaturated double bond or triple bond, R₇ and R₈ each independently include at least one of a saturated hydrocarbon group or an unsaturated hydrocarbon group having 1 to 6 carbon atoms, and a single bond, a value of x is any natural number of 1 to 5, and a value of y is any natural number of 0 to 5.

In the embodiments of this application, a halogen atom is introduced into the compounds of formula (IV), formula (V), formula (VI), and formula (VII), so that contents of inorganic components in the compounds can be increased to improve the insulativity of the interface film; a hydrocarbon group is introduced into the compounds, so that the stability of the compounds can be improved; and unsaturated double bonds or triple bonds are introduced into an end group of the compounds, so that the first additive has a multifunctional group structure, and is easier to form a crosslinked network structure in the film forming stage, which can better wrap the particle structure of the electrode material, and can inhibit the expansion of the electrode material, thereby further improving the cycle and storage performance.

In a possible embodiment, R₅ and R₆ each independently include at least one of H, F, a straight-chain alkyl group or branched-chain alkyl group having 1 to 3 carbon atoms, a straight-chain perfluorosubstituted alkyl group or branched-chain perfluorosubstituted alkyl group having 1 to 3 carbon atoms, and a group having 1 to 3 carbon atoms and containing an unsaturated double bond.

In the embodiments of this application, the structures of the compounds of formula (IV), formula (V), formula (VI), and formula (VII) are optimized by adjusting the number of carbon atoms of the groups introduced into the compounds of formula (IV), formula (V), formula (VI), and formula (VII), so that the first additive has suitable solubility and viscosity in the electrolyte solution, and can better participate in film forming in the electrolyte solution, to improve the stability of the interface film between the electrode plate and the electrolyte solution.

In a possible embodiment, R₇ and R₈ each independently include at least one of a saturated hydrocarbon group or an unsaturated hydrocarbon group having 1 to 3 carbon atoms.

In the embodiments of this application, if the number of carbon atoms of a hydrocarbon group structure among a plurality of ester groups is too large, the hydrocarbon group structure is too long, which affects the compactness of the electrode interface film formed by the first additive. The number of carbon atoms in R₇ and R₈ is adjusted, so that the length of the hydrocarbon group structure among the plurality of ester groups is suitable, so as to form an electrode interface film with a compact structure.

In a possible embodiment, the first additive includes at least one of the following substances:

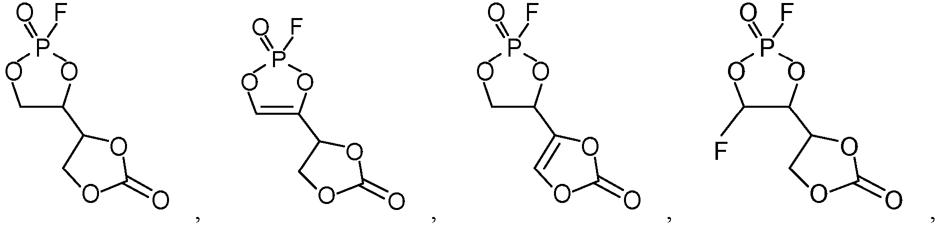

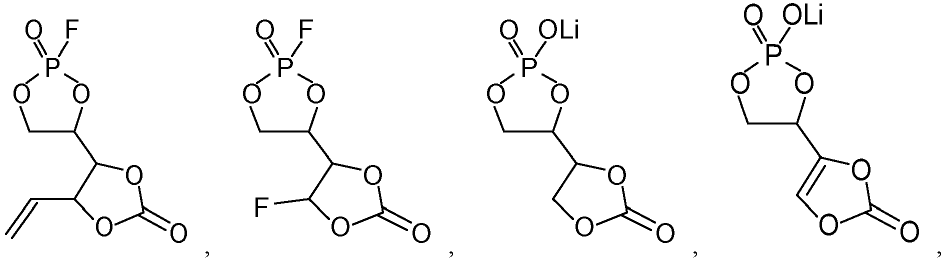

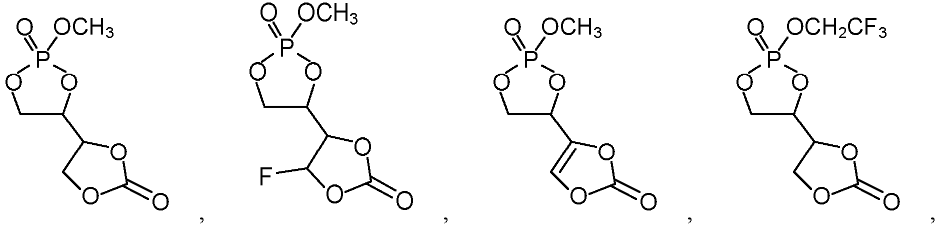

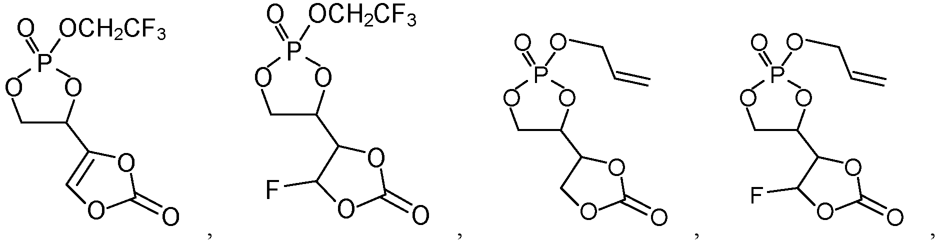

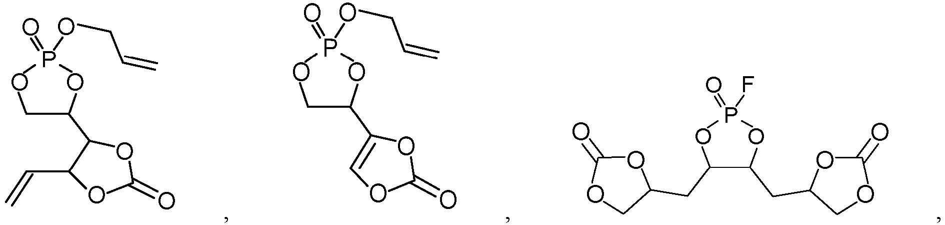

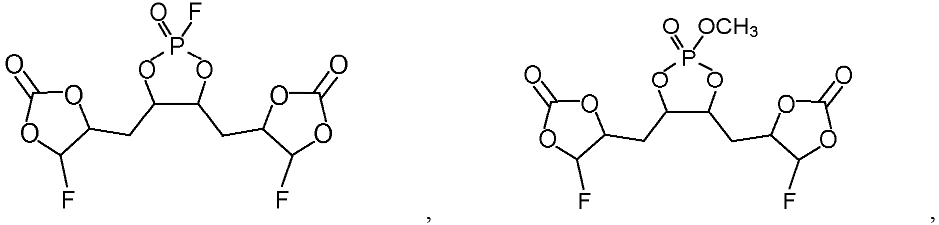

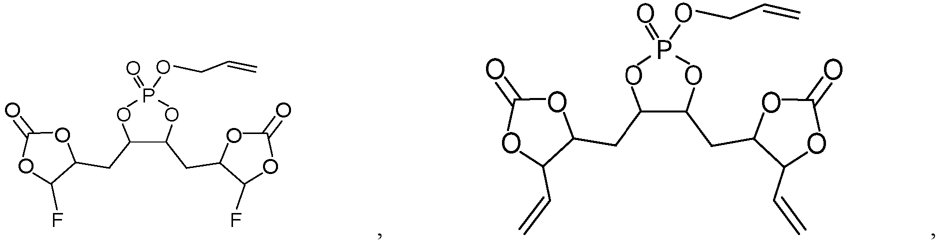

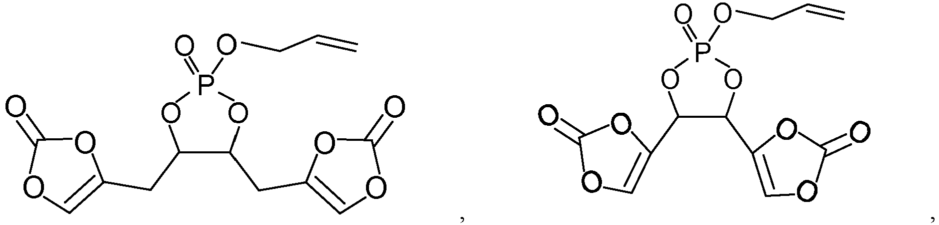

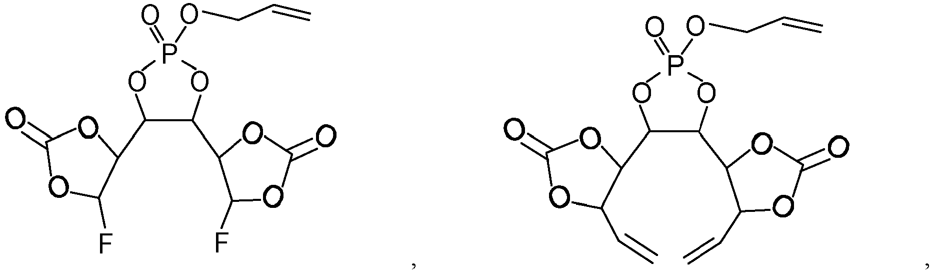

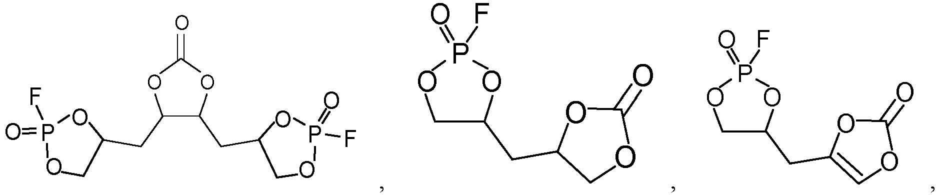

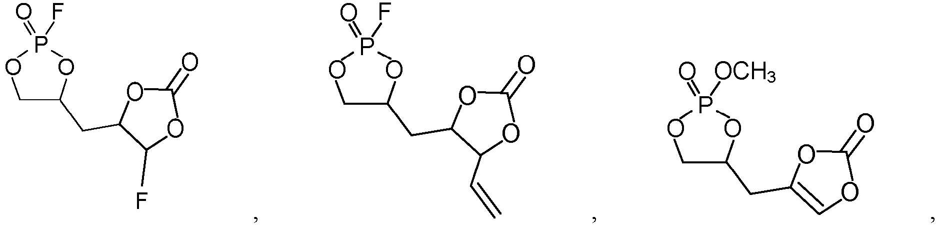

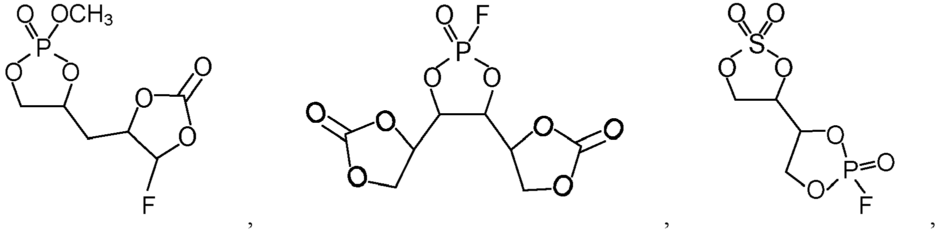

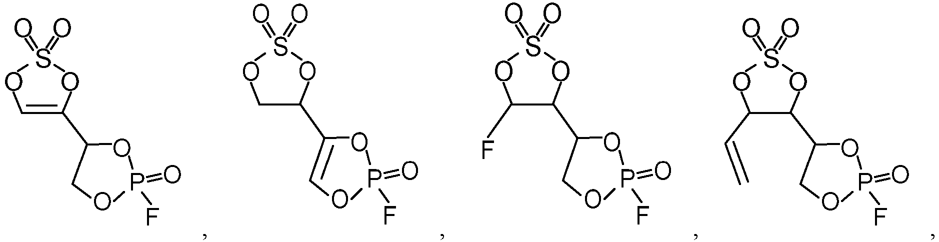

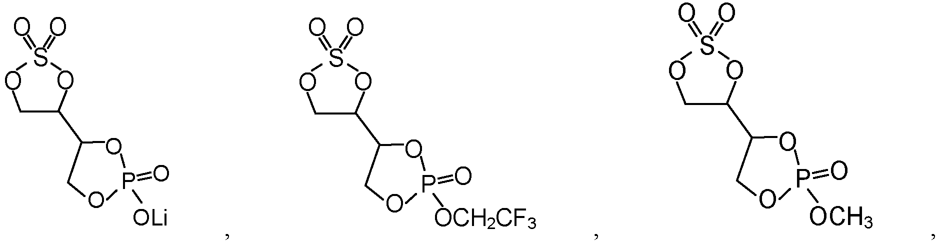

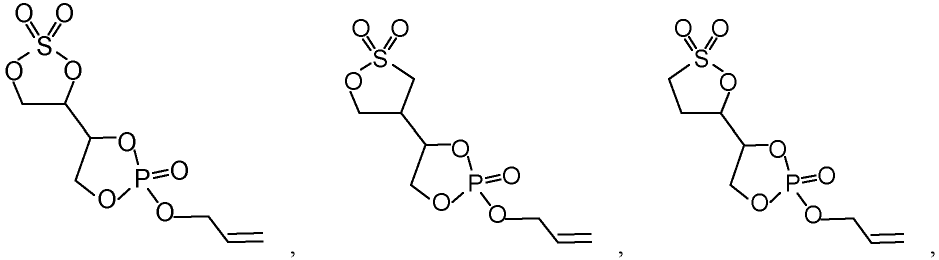

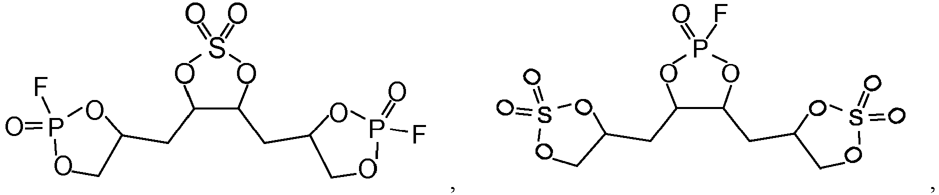

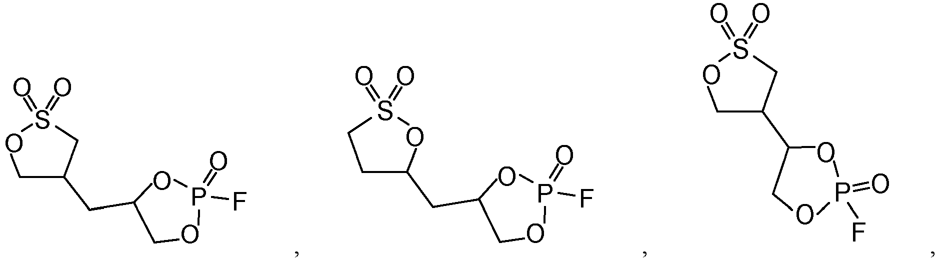

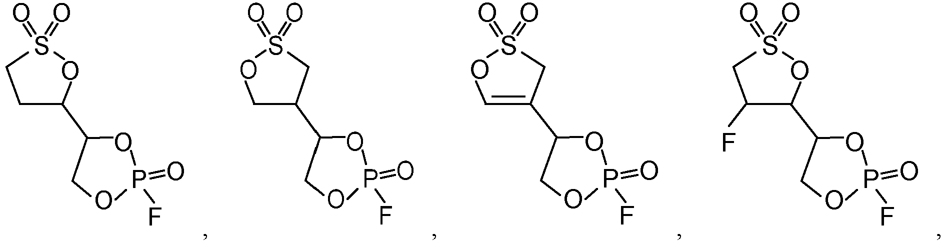

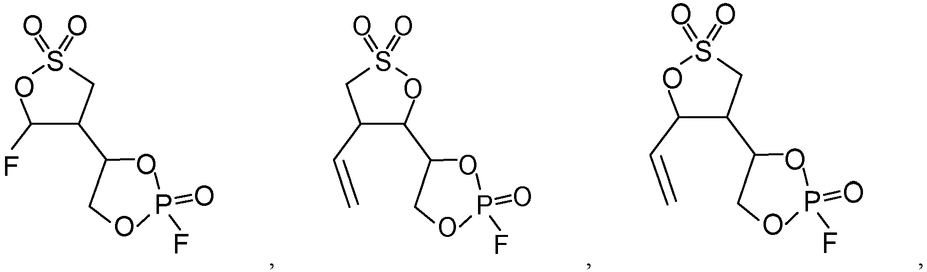

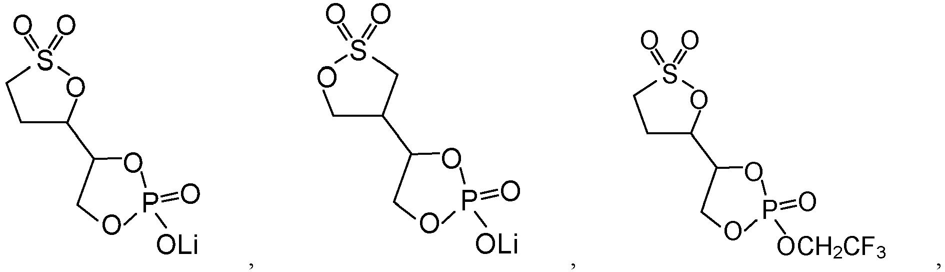

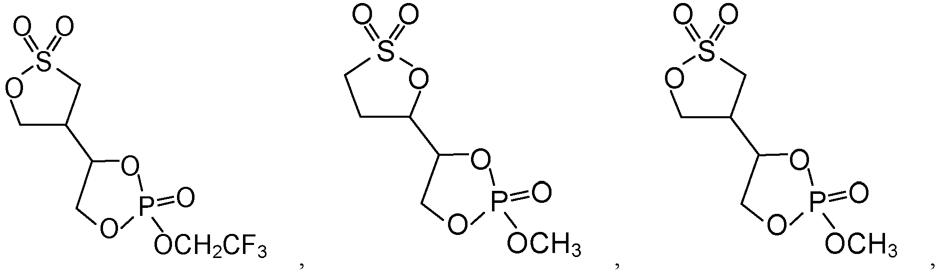

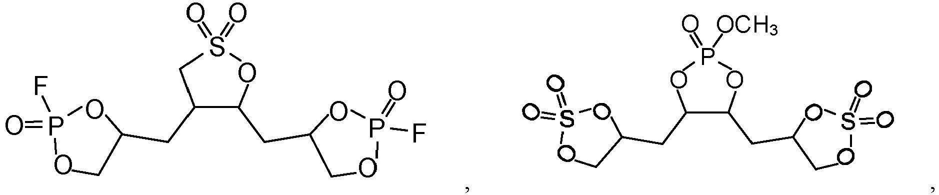

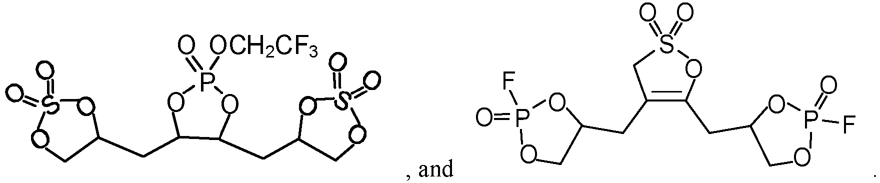

In a possible embodiment, the electrolyte solution further includes a second additive, and the second additive includes at least one of carbonate, sulfonate, sulfate, and phosphate.

In the formation stage of the battery, carbonate, sulfonate, sulfate, and phosphate form monomer reactive free radicals under an electrochemical reaction, thereby improving a reaction conversion rate of copolymerizing the first additive to form a copolymer. In this way, an interface film of the copolymer initially formed has a larger molecular weight and is more compact, which further improves the initial film-forming quality.

In a possible embodiment, the second additive includes at least one of vinylene carbonate, difluoroethylene carbonate, fluoroethylene carbonate, vinyl ethylene carbonate, propane sultone, propenyl-1,3-sultone, ethylene sulfate, bis(ethylene sulfate), tris(2,2,2-trifluoroethyl)phosphate, triallyl phosphate, and lithium difluorophosphate.

In a possible embodiment, the electrolyte solution further includes a third additive, and the third additive includes at least one of SO₂ and CO₂.

In the embodiments of this application, at least one of SO₂ and CO₂ is added to the electrolyte solution. SO₂ and CO₂ can change the bond breaking and forming form of the first additive in the formation stage, and inhibit the first additive from forming SO₂ and CO₂ in the formation stage, but form more inorganic-organic compact interface films containing carbonate, sulfate, and polycarbonate-polyphosphate and/or polysulfate/polysulfonate-polyphosphate, that is, the copolymer contains more sulfate and carbonate structures, so that the interface film is more compact, to better prevent co-intercalation of other molecules in the electrolyte solution, and avoid the damage to an electrode material caused by the co-intercalation of the other molecules, thereby improving the cycle stability and service life of the battery.

In a possible embodiment, a mass content of the third additive in the electrolyte solution is 10 ppm to 1000 ppm.

If the content of SO₂ and CO₂ is too low, the first additive cannot be effectively inhibited from forming SO₂ and CO₂ in the formation stage. If the content of SO₂ and CO₂ is too high, excessive sulfate ions and carbonate ions exist in the electrolyte solution, and may be combined with metal ions generated by the electrode material, reducing free metal ions in the electrolyte solution, resulting in the capacity fade of the battery.

In a possible embodiment, the electrolyte solution further includes a polymerization inhibitor, and optionally, the polymerization inhibitor includes at least one of hydroquinone and 2,6-di-tert-butyl-p-cresol.

Hydroquinone and 2,6-di-tert-butyl-p-cresol are added to the electrolyte solution to serve as a polymerization inhibitor, to reduce a risk of a chemical reaction between substances in the electrolyte solution under full contact during transportation of the battery, thereby reducing a risk of damaging components of the electrolyte solution.

In a possible embodiment, a mass content of the polymerization inhibitor in the electrolyte solution is less than 20 ppm, and optionally, the mass content of the polymerization inhibitor in the electrolyte solution is less than 10 ppm.

The content of the polymerization inhibitor in the electrolyte solution is inadvisable to be too high. Otherwise, the copolymerization reaction of the first additive is inhibited, the film forming of the battery in the formation stage is affected, and a stable interface film cannot be formed between the electrode plate and the electrolyte solution. The content of the polymerization inhibitor is controlled, so that the film-forming quality of the battery in the formation stage is improved, thereby improving the service performance and service life of the battery.

In a possible embodiment, the electrolyte solution further includes a solvent, and the solvent has a relative dielectric constant greater than 2 and a viscosity less than 2 mPa·s at 25°C.

If the relative dielectric constant of the solvent in the electrolyte solution is too small or the viscosity is too high, the additive is difficult to dissolve in the solvent.

In a possible embodiment, the solvent includes at least one of carbonate, carboxylic acid ester, ether, sulfone, fluorocarbonate, fluorocarboxylate, fluoroether, and fluorosulfone.

In a possible embodiment, the electrolyte solution further includes a metal salt, the metal salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorooxalate borate, lithium bis(oxalato)borate, lithium difluorophosphate, lithium difluorobis(oxalato)phosphate, and lithium tetrafluoro(oxalato)phosphate, and optionally, the metal salt includes at least one of lithium hexafluorophosphate and lithium bis(fluorosulfonyl)imide.

In a possible embodiment, an acidity value of the electrolyte solution is less than 800 ppm.

If the acidity value of the electrolyte solution is too large, the first additive is likely to be unstable and degraded, making it difficult to form a copolymer and affecting the film-forming quality.

According to a second aspect, a battery is provided, including: the electrolyte solution in the above first aspect or any possible embodiment of the first aspect.

According to a third aspect, a power consuming device is provided, including: the battery in the above second aspect or any possible embodiment of the second aspect, where the battery is configured to provide electric energy.

In the embodiments of this application, the electrolyte solution includes a first additive, where the first additive includes at least one of a compound containing at least groups represented by formula (I) and formula (II), and a compound containing at least groups represented by formula (I) and formula (III). That is, the first additive includes at least one of a compound containing both a cyclic phosphate structure and a cyclic carbonate structure, and a compound containing both a cyclic phosphate structure and a cyclic sulfate structure and/or a cyclic sulfonate structure. The first additive undergoes a copolymerization reaction at an electrode interface and participates in film forming at the formation stage of the battery. A formed copolymer has advantages of both a polycarbonate polymer and a polyphosphate polymer or both polyphosphate and polysulfate and/or polysulfonate. The crystallinity of the copolymer is reduced, the toughness of the formed interface film is improved, and the stability of the interface film is improved, thereby prolonging the storage life of the battery. In addition, the compound containing both a cyclic carbonate structure and a cyclic phosphate structure, or the compound containing both a cyclic phosphate structure and a cyclic sulfate structure and/or a cyclic sulfonate structure has a large molecular structure, a large steric hindrance, and a weak solvation ability. Therefore, the compound has low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery.

### BRIEF DESCRIPTION OF THE DRAWINGS

To provide a clearer explanation of the technical solutions of the embodiments of this application, a brief introduction will be given to the accompanying drawings required in the embodiments of this application. It is evident that the accompanying drawings described below are only some embodiments of this application. For ordinary technical personnel in the art, other accompanying drawings can be obtained based on the drawings without any creative effort.
FIG. 1 is a schematic diagram of a battery cell disclosed in an embodiment of this application;
FIG. 2 is an exploded schematic structural diagram of a battery cell disclosed in an embodiment of this application;
FIG. 3 is an exploded schematic structural diagram of a battery disclosed in an embodiment of this application; and
FIG. 4 is a schematic diagram of a power consuming apparatus disclosed in an embodiment of this application.

The drawings are not drawn in an actual proportion.

Reference numerals in the specific embodiments are as follows:
Battery 10, box 11, battery cell 20, housing 21, electrode assembly 22, and cover plate 23.

### DETAILED DESCRIPTION

Embodiments of an electrolyte solution, a battery cell containing the same, a battery, and a power consuming apparatus of this application are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

In the descriptions of this application, it should be noted that, unless otherwise stated, "a plurality of" means two or more; and the orientations or positional relationships indicated by the terms "upper", "lower", "left", "right", "inside", "outside", and the like are merely intended to help describe this application and simplify the descriptions other than indicate or imply that the apparatuses or components must have specific orientations, or be constructed and manipulated with specific orientations, and therefore shall not be understood as limitations on this application. Moreover, the terms "first", "second", "third" and the like are used for descriptive purposes only and are not to be construed as indicating or implying relative importance.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

Unless otherwise specified, all embodiments and optional embodiments of this application may be combined with each other to form new technical solutions.

Unless otherwise specified, all technical features and optional technical features of this application can be combined to form new technical solutions.

Unless otherwise specified, the following terms have the following meanings. Any undefined terms have their technically recognized meanings.

"Alkyl group" refers to a monovalent saturated hydrocarbon group having one or more carbon atoms, optionally 1 to 18 carbon atoms. For example, alkyl groups include straight-chain alkyl groups and branched-chain alkyl groups, such as methyl (CH₃-), ethyl (CH₃CH₂-), n-propyl (CH₃CH₂CH₂-), isopropyl ((CH₃)₂CH-), n-butyl (CH₃CH₂CH₂CH₂-), isobutyl ((CH₃)₂CHCH₂-), sec-butyl ((CH₃)(CH₃CH₂)CH-), tert-butyl ((CH₃)₃C-), n-pentyl (CH₃CH₂CH₂CH₂CH₂-), and neopentyl ((CH₃)₃CCH₂-).

"Perfluorosubstituted alkyl group" refers to replacement of all hydrogen atoms of carbon hydrogen bonds in an alkyl group with fluorine atoms, for example, perfluorosubstituted methyl (CF₃-), perfluorosubstituted ethyl (CF₃CF₂-), perfluorosubstituted n-propyl (CF₃CF₂CF₂-), or perfluorosubstituted isobutyl ((CF₃)₂CFCF₂-).

"Unsaturated double bond" refers to a bond formed by sharing two electron pairs between two atoms, for example, a carbon-carbon double bond (C=C), or a carbon-oxygen double bond (C=O).

Generally, a secondary battery includes a positive electrode plate, a negative electrode plate, an electrolyte solution, and a separator. During the charge/discharge of the battery, active ions are intercalated and deintercalated back and forth between the positive electrode plate and the negative electrode plate. An electrolyte in the electrolyte solution plays a role of conducting ions between the positive electrode plate and the negative electrode plate. The separator is arranged between the positive electrode plate and the negative electrode plate to prevent a short circuit between a positive electrode and a negative electrode while allowing ions to pass through, so that an electrochemical reaction of the secondary battery proceeds normally.

The secondary battery may include a lithium-ion battery, a sodium-ion battery, a magnesium-ion battery, or the like. This application takes a lithium-ion battery as an example. The lithium-ion battery is a typical secondary battery. Because of relying on a chemical reaction of deintercalation of lithium ions between the positive and negative electrodes for charging and discharging, the lithium-ion battery is also referred to as a rocking-chair battery. During charging of the lithium-ion battery, lithium ions are deintercalated from the positive electrode, moved, and intercalated into the negative electrode. During discharging, lithium ions are deintercalated from the negative electrode, moved, and intercalated into the positive electrode.

In recent years, secondary batteries have been greatly developed, and are widely used in a plurality of fields such as electric tools, electronic products, electric vehicles, and aerospace, and higher requirements have been placed on the volume capacity, energy density, and cycle performance of the secondary batteries.

During first charging of a secondary battery, a film-forming additive in the electrolyte solution is reduced on a surface of an electrode plate to form a solid electrolyte interphase (SEI) film. The SEI film can prevent a non-aqueous organic solvent in the electrolyte solution from being further decomposed, and form an ion channel in a subsequent charge-discharge cycle. However, as charging/discharging proceeds, the SEI film between the electrolyte solution and the electrode plate deteriorates in stability, gradually ruptures, and then regrows, causing the electrolyte solution to be continuously consumed, which affects the cycle stability and service life of the secondary battery.

In view of this, this application provides an electrolyte solution. The electrolyte solution includes a first additive, where the first additive includes at least one of a compound containing at least groups represented by formula (I) and formula (II), and a compound containing at least groups represented by formula (I) and formula (III). That is, the first additive includes at least one of a compound containing both a cyclic phosphate structure and a cyclic carbonate structure, and a compound containing both a cyclic phosphate structure and a cyclic sulfate structure and/or a cyclic sulfonate structure. The first additive undergoes a copolymerization reaction at an electrode interface and participates in film forming at the formation stage of the battery. A formed copolymer has advantages of both a polycarbonate polymer and a polyphosphate polymer or both polyphosphate and polysulfate and/or polysulfonate. The crystallinity of the copolymer is reduced, the toughness of the formed interface film is improved, and the stability of the interface film is improved, thereby prolonging the storage life of the battery. In addition, the compound containing both a cyclic carbonate structure and a cyclic phosphate structure, or the compound containing both a cyclic phosphate structure and a cyclic sulfate structure and/or a cyclic sulfonate structure has a large molecular structure, a large steric hindrance, and a weak solvation ability. Therefore, the compound has low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery.

Hereinafter, a plurality of embodiments of this application are specifically introduced.

### [Electrolyte solution]

The electrolyte solution plays a role of conducting ions between the positive electrode plate and the negative electrode plate. The electrolyte solution provided in this application includes a first additive. Specifically, the first additive includes at least one of a compound containing at least groups represented by formula (I) and formula (II), and a compound containing at least groups represented by formula (I) and formula (III): 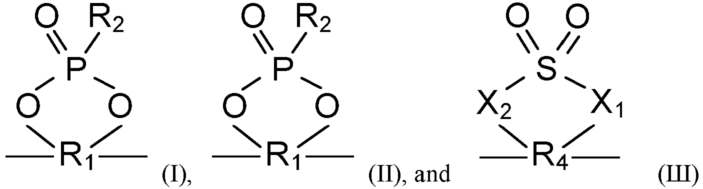 where R₁, R₃, and R₄ each independently include at least one of a saturated hydrocarbon group or an unsaturated hydrocarbon group, R₂ includes F, OLi, OCH₂CF₃, OCH₃, OCH₂CH₂=CH₂, OCH₂CH₂CH₂=CH₂, OSi(OCH₃)₃, OSi(OCH₂CH₂=CH₂)₃, or OSi(CH₂=CH₂)₃, X₁ and X₂ include O or CH₂, and X₁ and X₂ are not CH₂ simultaneously.

Specifically, the first additive includes at least one of a compound containing both a cyclic carbonate structure and a cyclic phosphate structure, and a compound containing both a cyclic phosphate structure and a cyclic sulfate structure and/or a cyclic sulfonate structure. The cyclic carbonate has a high dielectric constant and a high ionic conductivity, and can form a stable interface film on a surface of an electrode. The addition of the cyclic phosphate to the electrolyte solution can make the electrolyte solution have good stability and high conductivity, and improve the safety and flame retardance of the battery. In the electrolyte solution, compounds containing both a cyclic carbonate structure and a cyclic phosphate structure undergo a copolymerization reaction, and a copolymer formed has advantages of both a polycarbonate polymer and a polyphosphate polymer. The addition of the cyclic sulfate to the electrolyte solution can inhibit the decrease in the initial capacity of the battery, increase the initial discharge capacity, reduce the expansion of the battery after high-temperature standing, and improve the charge and discharge performance and cycle performance of the battery. The addition of the cyclic sulfonate to the electrolyte solution can form a stable interface film on the surface of the electrode. In the electrolyte solution, compounds containing both a cyclic phosphate structure and a cyclic sulfate structure and/or a cyclic sulfonate structure undergo a copolymerization reaction, and a copolymer formed has advantages of both a polyphosphate polymer and a polysulfate polymer and/or a polysulfonate polymer.

Therefore, the electrolyte solution provided in the embodiments of this application includes a first additive, where the first additive includes at least one of a compound containing at least groups represented by formula (I) and formula (II), and a compound containing at least groups represented by formula (I) and formula (III). That is, the first additive includes at least one of a compound containing both a cyclic phosphate structure and a cyclic carbonate structure, and a compound containing both a cyclic phosphate structure and a cyclic sulfate structure and/or a cyclic sulfonate structure. The first additive undergoes a copolymerization reaction at an electrode interface and participates in film forming at the formation stage of the battery. A formed copolymer has advantages of both a polycarbonate polymer and a polyphosphate polymer or both polyphosphate and polysulfate and/or polysulfonate. The crystallinity of the copolymer is reduced, the toughness of the formed interface film is improved, and the stability of the interface film is improved, thereby prolonging the storage life of the battery. In addition, the compound containing both a cyclic carbonate structure and a cyclic phosphate structure, or the compound containing both a cyclic phosphate structure and a cyclic sulfate structure and/or a cyclic sulfonate structure has a large molecular structure, a large steric hindrance, and a weak solvation ability. Therefore, the compound has low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery.

Optionally, in some embodiments, a mass content of the first additive in the electrolyte solution is 0.0001% to 10%, and optionally, the mass content of the first additive in the electrolyte solution is 0.01% to 5%.

Specifically, the mass content of the first additive in the electrolyte solution may be 0.0001%, 0.0005%, 0.001%, 0.0015%, 0.002%, 0.0025%, 0.003%, 0.0035%, 0.004%, 0.0045%, 0.005%, 0.0055%, 0.006%, 0.0065%, 0.007%, 0.0075%, 0.008%, 0.0085%, 0.009%, 0.0095%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%, or a value within a range obtained by combining any two of the above values.

Optionally, in some embodiments, the first additive includes at least one of compounds represented by formula (IV), formula (V), formula (VI), and formula (VII): 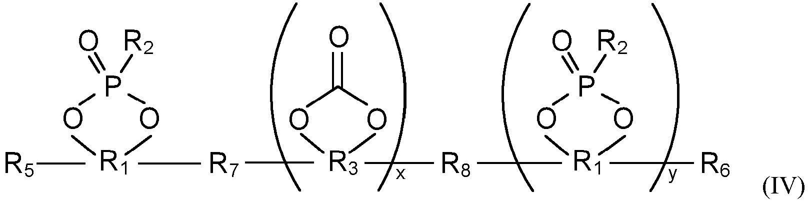 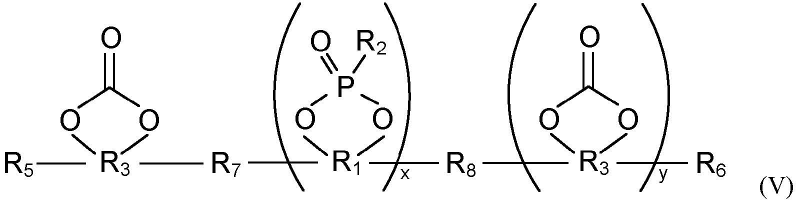 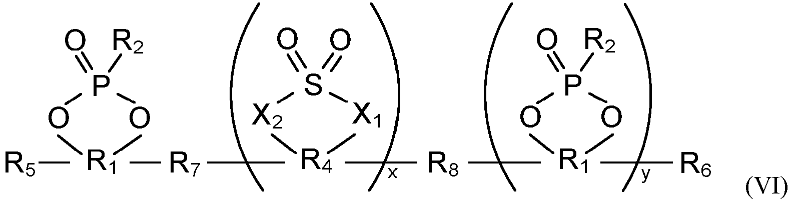 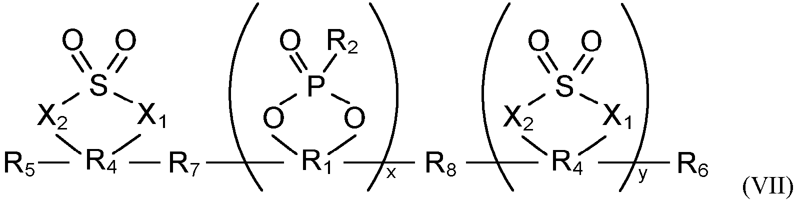 where R₅ and R₆ each independently include at least one of H, a halogen atom, a substituted hydrocarbon group or an unsubstituted hydrocarbon group, and a group containing an unsaturated double bond or triple bond, R₇ and R₈ each independently include at least one of a saturated hydrocarbon group or an unsaturated hydrocarbon group having 1 to 6 carbon atoms, and a single bond, a value of x is any natural number of 1 to 5, and a value of y is any natural number of 0 to 5.

In the embodiments of this application, a halogen atom is introduced into the compounds of formula (IV), formula (V), formula (VI), and formula (VII), so that contents of inorganic components in the compounds can be increased to improve the insulativity of the interface film; a hydrocarbon group is introduced into the compounds, so that the stability of the compounds can be improved; and unsaturated double bonds or triple bonds are introduced into an end group of the compounds, so that the first additive has a multifunctional group structure, and is easier to form a crosslinked network structure in the film forming stage, which can better wrap the particle structure of the electrode material, and can inhibit the expansion of the electrode material, thereby further improving the cycle and storage performance.

Optionally, a value of x may be 1 or 2, a value of y may be 0, 1, or 2. For example, x = 1, and y = 1; x = 2, and y = 1; x = 2, and y = 2; x = 1, y = 2, x = 2, and y = 0.

Optionally, in some embodiments, R₅ and R₆ each independently include at least one of H, F, a straight-chain alkyl group or branched-chain alkyl group having 1 to 3 carbon atoms, a straight-chain perfluorosubstituted alkyl group or branched-chain perfluorosubstituted alkyl group having 1 to 3 carbon atoms, and a group having 1 to 3 carbon atoms and containing an unsaturated double bond.

In the embodiments of this application, the structures of the compounds of formula (IV), formula (V), formula (VI), and formula (VII) are optimized by adjusting the number of carbon atoms of the groups introduced into the compounds of formula (IV), formula (V), formula (VI), and formula (VII), so that the first additive has suitable solubility and viscosity in the electrolyte solution, and can better participate in film forming in the electrolyte solution, to improve the stability of the interface film between the electrode plate and the electrolyte solution.

Optionally, in some embodiments, R₇ and R₈ each independently include at least one of a saturated hydrocarbon group or an unsaturated hydrocarbon group having 1 to 3 carbon atoms.

In the embodiments of this application, if the number of carbon atoms of a hydrocarbon group structure among a plurality of ester groups is too large, the hydrocarbon group structure is too long, which affects the compactness of the electrode interface film formed by the first additive. The number of carbon atoms in R₇ and R₈ is adjusted, so that the length of the hydrocarbon group structure among the plurality of ester groups is suitable, so as to form an electrode interface film with a compact structure.

Optionally, in some embodiments, the first additive includes at least one of the following substances: 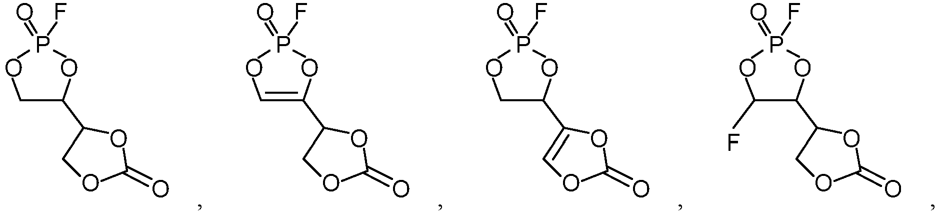 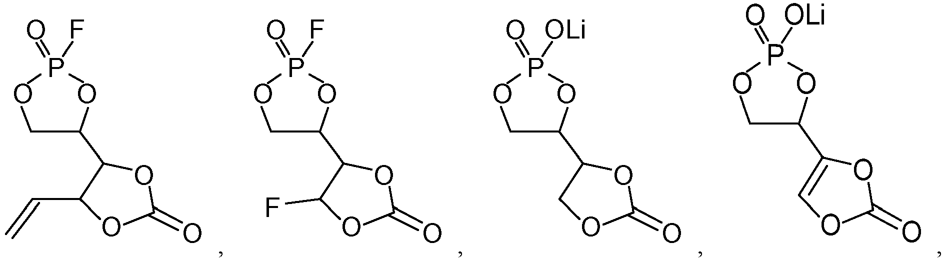 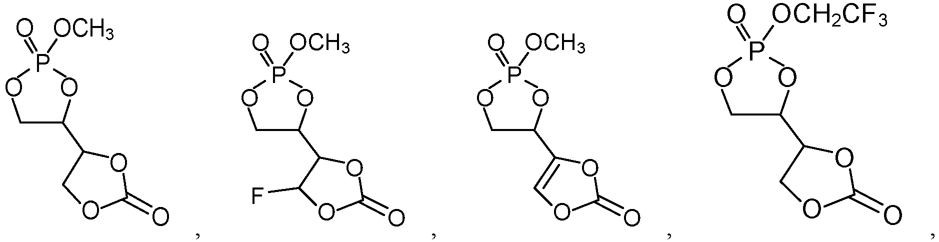 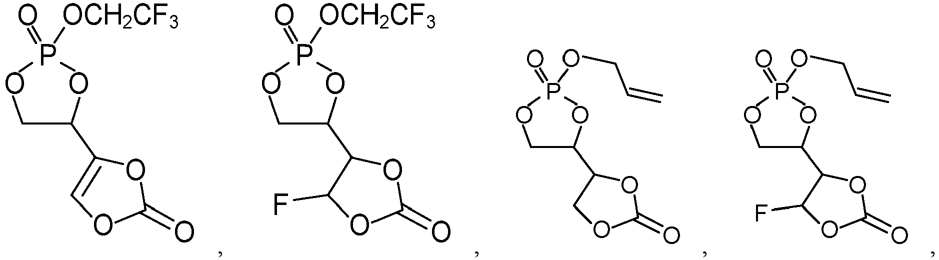 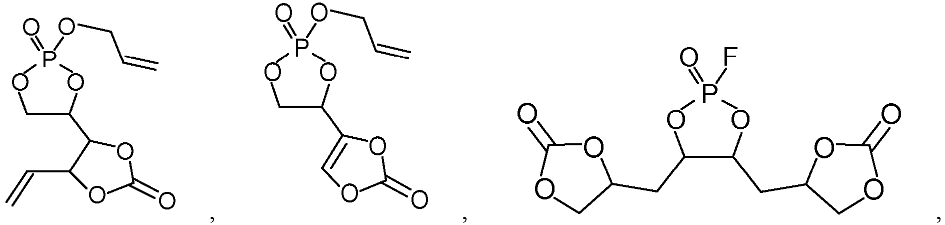 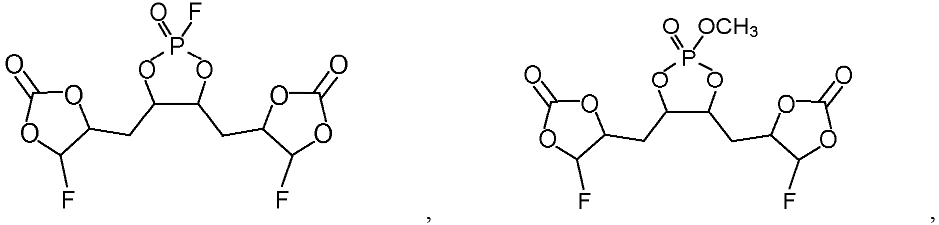 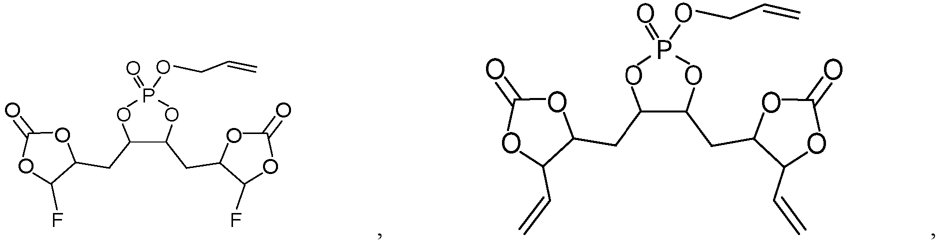 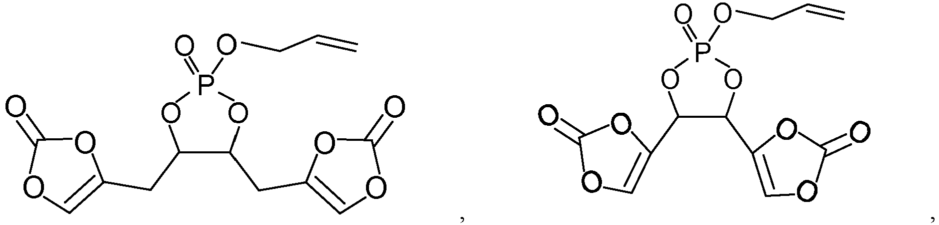 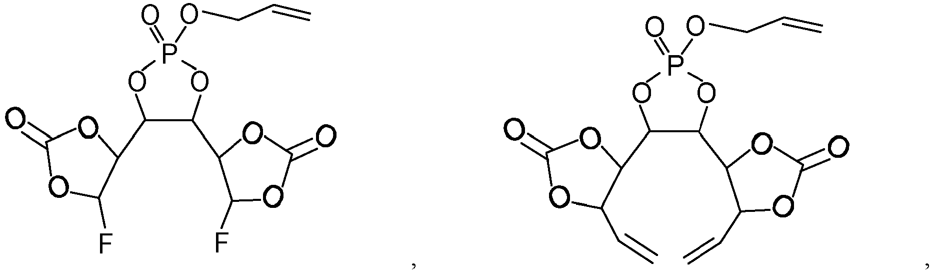 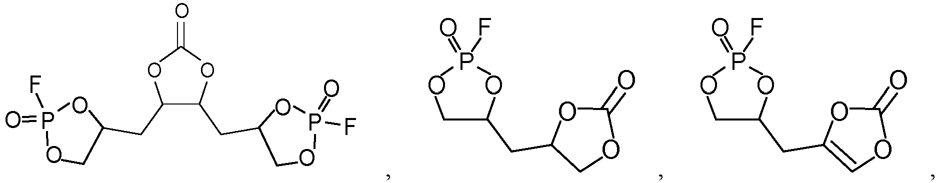 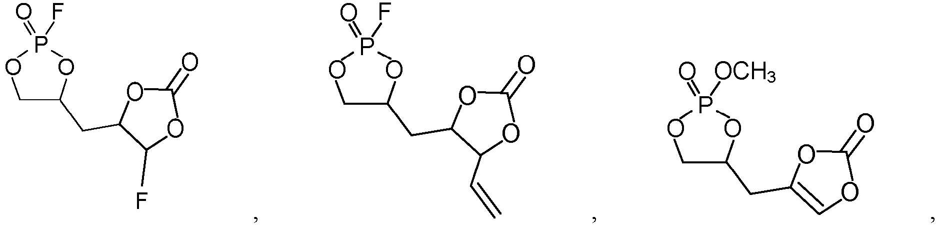 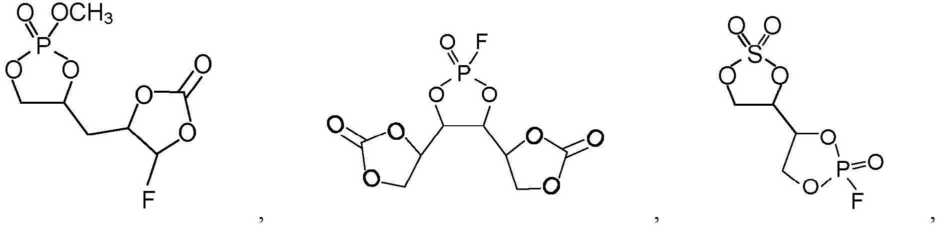 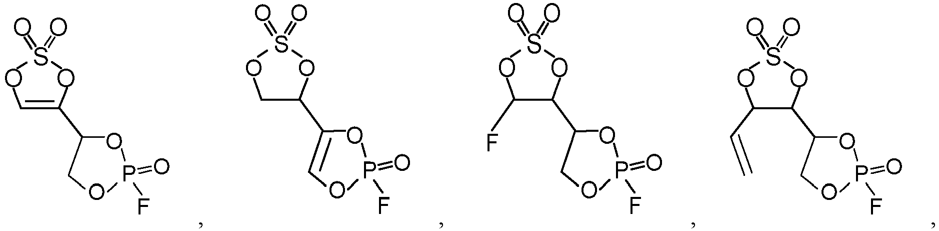 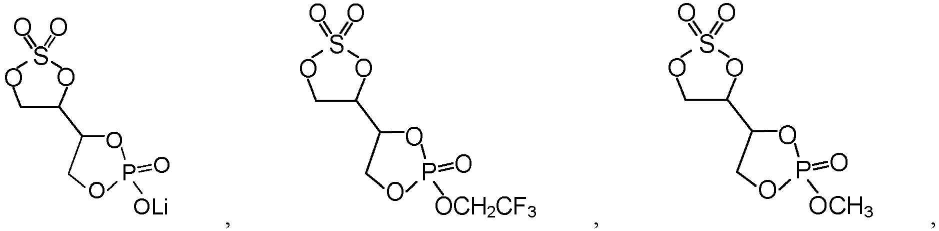 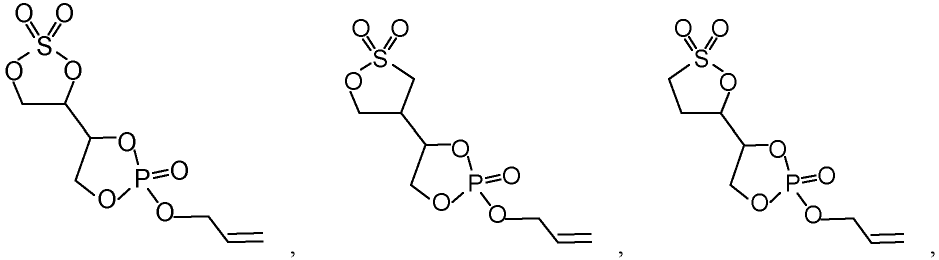 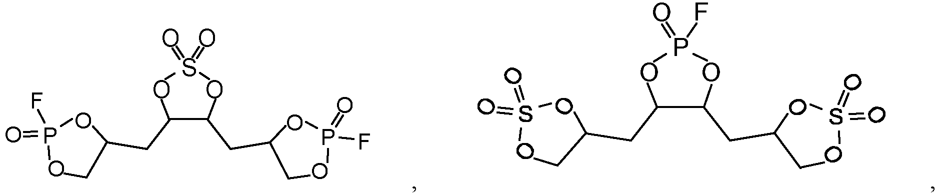 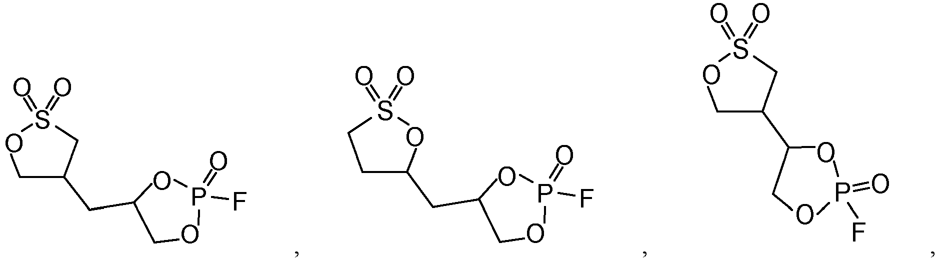 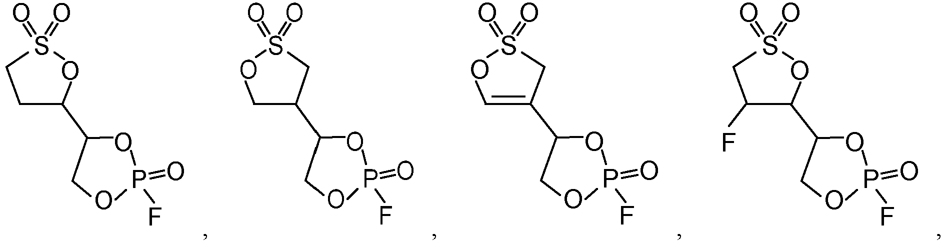 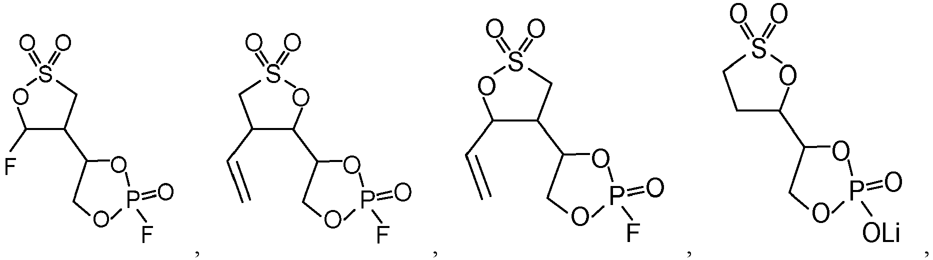 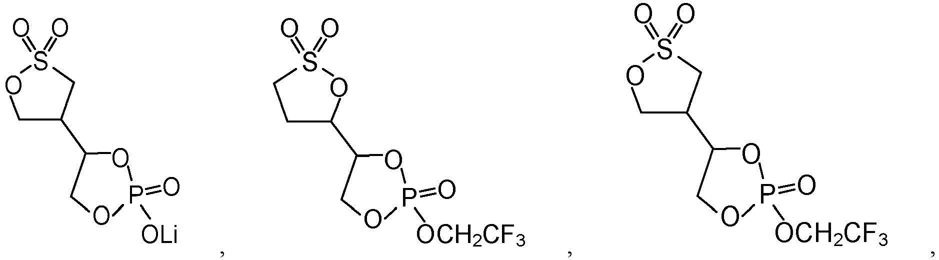 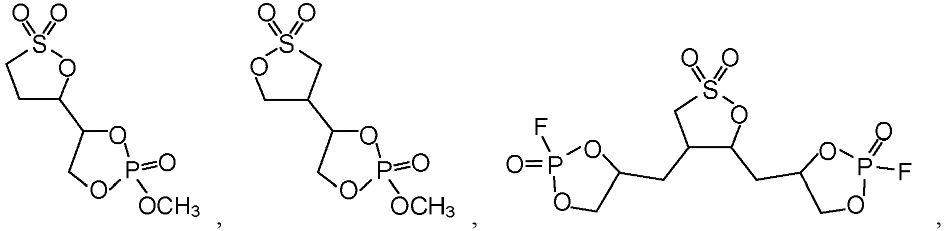 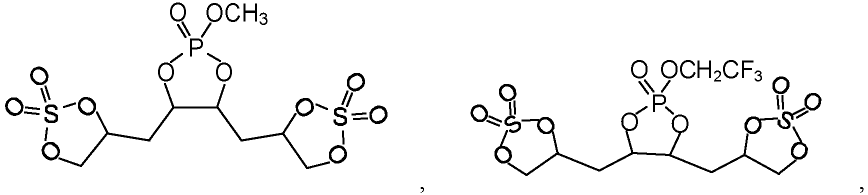 and

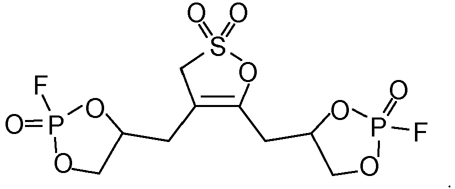

It should be understood that the various compounds included in the first additive provided in the embodiments of this application are merely examples, and should not be construed as a limitation on the compounds of this application.

In the embodiments of this application, a fluorine atom with the strongest electronegativity among halogens is selected to be introduced into a cyclic phosphate structure represented by formula (I), which can further improve the stability and antioxidant performance of the compound containing the cyclic phosphate structure. Optionally, R₂ in the cyclic phosphate structure represented by formula (I) is a fluorine atom.

If the content of the first additive in the electrolyte solution is too low, no enough copolymer can be formed to participate in film forming, which affects the stability of the interface film, resulting in an unstable interface between the electrode plate and the electrolyte solution. If the content of the first additive in the electrolyte solution is too high, the viscosity of the electrolyte solution is too high, which affects the infiltration of the electrode plate by the electrolyte solution, and affects the charge and discharge performance of the battery.

Optionally, in some embodiments, the electrolyte solution further includes a second additive, and the second additive includes at least one of carbonate, sulfonate, sulfate, and phosphate.

Specifically, the second additive includes at least one of vinylene carbonate (VC), difluoroethylene carbonate (DFEC), fluoroethylene carbonate (FEC), vinyl ethylene carbonate (VEC), propane sultone, propenyl-1,3-sultone, ethylene sulfate, bis(ethylene sulfate), tris(2,2,2-trifluoroethyl)phosphate, triallyl phosphate, and lithium difluorophosphate.

It should be understood that the various compounds as the second additive provided in the embodiments of this application are merely examples, and should not be construed as a limitation on the second additive of this application.

In the formation stage of the battery, carbonate, sulfonate, sulfate, and phosphate form monomer reactive free radicals under an electrochemical reaction, thereby improving a reaction conversion rate of copolymerizing the first additive to form a copolymer. In this way, an interface film of the copolymer initially formed has a larger molecular weight and is more compact, which further improves the initial film-forming quality.

Optionally, in some embodiments, the electrolyte solution further includes a third additive, and the third additive includes at least one of SO₂ and CO₂.

In the embodiments of this application, at least one of SO₂ and CO₂ is added to the electrolyte solution. SO₂ and CO₂ can change the bond breaking and forming form of the first additive in the formation stage, and inhibit the first additive from forming SO₂ and CO₂ in the formation stage, but form more inorganic-organic compact interface films containing sulfate, carbonate, and polycarbonate-polyphosphate and/or polysulfate/polysulfonate-polyphosphate, that is, the copolymer contains more phosphate and carbonate structures, so that the interface film is more compact, to better prevent co-intercalation of other molecules in the electrolyte solution, and avoid the damage to an electrode material caused by the co-intercalation of the other molecules, thereby improving the cycle stability and service life of the battery.

Optionally, in some embodiments, a mass content of the third additive in the electrolyte solution is 10 ppm to 1000 ppm.

If the content of SO₂ and CO₂ is too low, the first additive cannot be effectively inhibited from forming SO₂ and CO₂ in the formation stage. If the content of SO₂ and CO₂ is too high, excessive sulfate ions and carbonate ions exist in the electrolyte solution, and may be combined with metal ions generated by the electrode material, reducing free metal ions in the electrolyte solution, resulting in the capacity fade of the battery.

Optionally, in some embodiments, the electrolyte solution further includes a polymerization inhibitor, and optionally, the polymerization inhibitor includes at least one of hydroquinone and 2,6-di-tert-butyl-p-cresol.

It should be understood that the various compounds as the polymerization inhibitor provided in the embodiments of this application are merely examples, and should not be construed as a limitation on the polymerization inhibitor of this application.

Hydroquinone and 2,6-di-tert-butyl-p-cresol are added to the electrolyte solution to serve as a polymerization inhibitor, to reduce a risk of a chemical reaction between substances in the electrolyte solution under full contact during transportation of the battery, thereby reducing a risk of damaging components of the electrolyte solution.

Optionally, in some embodiments, a mass content of the polymerization inhibitor in the electrolyte solution is less than 20 ppm, and optionally, the mass content of the polymerization inhibitor in the electrolyte solution is less than 10 ppm.

Optionally, the mass content of the polymerization inhibitor in the electrolyte solution may be 15 ppm, 10 ppm, 5 ppm, 4 ppm, 3 ppm, 2 ppm, or 1 ppm.

The content of the polymerization inhibitor in the electrolyte solution is inadvisable to be too high. Otherwise, the copolymerization reaction of the first additive is inhibited, the film forming of the battery in the formation stage is affected, and a stable interface film cannot be formed between the electrode plate and the electrolyte solution. The content of the polymerization inhibitor is controlled, so that the film-forming quality of the battery in the formation stage is improved, thereby improving the service performance and service life of the battery.

Optionally, in some embodiments, the electrolyte solution further includes a solvent, and the solvent has a relative dielectric constant greater than 2 and a viscosity less than 2 mPa·s at 25°C.

Optionally, the relative dielectric constant of the solvent at 25°C may be 3, 4, 5, or 6; and the viscosity of the solvent at 25°C may be 1.5 mPa·s or 1 mPa·s.

If the relative dielectric constant of the solvent in the electrolyte solution is too small or the viscosity is too high, the additive is difficult to dissolve in the solvent.

Optionally, in some embodiments, the solvent includes at least one of carbonate, carboxylic acid ester, ether, sulfone, fluorocarbonate, fluorocarboxylate, fluoroether, and fluorosulfone.

The solvent of the electrolyte solution is usually an organic solvent such as carbonate, carboxylic acid ester, ether, or sulfone. The above organic solvent can improve infiltration performance of the electrolyte solution for the electrode plate, and has a high dielectric constant, which reduces the impedance of intercalating active ions into the electrode plate, improves the conductivity, and improves the cycle performance of the battery.

Optionally, in some embodiments, the electrolyte solution further includes a metal salt.

Taking a lithium-ion battery as an example, the electrolyte solution of the lithium-ion battery includes a lithium salt. Specifically, the lithium salt includes at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP), and optionally, the lithium salt includes at least one of LiPF₆ and LiFSI.

The secondary battery may include a lithium-ion battery, a sodium-ion battery, a magnesium-ion battery, or the like. Correspondingly, the metal salt may be a lithium salt, a sodium salt, a magnesium salt, or the like. It should be understood that the various metal salts provided in the embodiments of this application are merely examples, and should not be construed as a limitation on the metal salt of this application.

Optionally, in some embodiments, an acidity value of the electrolyte solution is less than 800 ppm.

Optionally, the acidity value of the electrolyte solution may be 700 ppm, 650 ppm, 600 ppm, 550 ppm, or 500 ppm.

Specifically, the acidity value of the electrolyte solution refers to the mass content of hydrofluoric acid (HF) in the electrolyte solution, and the free HF in the electrolyte solution can be titrated with a standard solution, namely, a triethylamine solution.

If the acidity value of the electrolyte solution is too large, the first additive is likely to be unstable and degraded, making it difficult to form a copolymer and affecting the film-forming quality.

The following describes a battery cell, a battery, and a power consuming apparatus in this application with reference to the accompanying drawings.

An embodiment of this application further provides a battery cell. Generally, a battery cell includes a positive electrode plate, a negative electrode plate, an electrolyte solution, and a separator. During the charge/discharge of the battery, active ions are intercalated and deintercalated back and forth between the positive electrode plate and the negative electrode plate. An electrolyte in the electrolyte solution plays a role of conducting ions between the positive electrode plate and the negative electrode plate. The separator is arranged between the positive electrode plate and the negative electrode plate, mainly to prevent a short circuit between a positive electrode and a negative electrode while allowing ions to pass through.

It should be understood that the "intercalation" process described in this application refers to a process in which active ions are intercalated into a positive electrode active material or a negative electrode active material due to an electrochemical reaction, and the "deintercalation" and "deintercalation" process described in this application refers to a process in which active ions are deintercalated from the positive electrode active material or the negative electrode active material due to an electrochemical reaction.

### [Positive electrode plate]

The positive electrode plate includes a positive electrode current collector and a positive electrode film layer arranged on at least one surface of the positive electrode current collector, and the positive electrode film layer includes a positive electrode active material.

For example, the positive electrode current collector has two opposite surfaces in its own thickness direction, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material substrate and a metal layer formed on at least one surface of the polymer material substrate. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode active material may be a positive electrode active material used for a lithium-ion battery and well known in the art. For example, the positive electrode active material may include at least one of the following materials: a lithium-containing phosphate of an olivine structure, a lithium transition metal oxide, and their respective modified compounds. However, this application is not limited to such materials, and may alternatively use other conventional materials that can be used as positive electrode active materials for lithium-ion batteries. Only one or a combination of two or more of these positive electrode active materials may be used. An example of the lithium transition metal oxide may include, but is not limited to, a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (also referred to as NCM333 for short), LiNi_{0.5}Co_{0.2}Mn_{0.3}O₂ (also referred to as NCM523 for short), LiNi_{0.5}Co_{0.25}Mn_{0.25}O₂ (also referred to as NCM211 for short), LiNi_{0.6}Co_{0.2}Mn_{0.2}O₂ (also referred to as NCM622 for short), or LiNi_{0.8}Co_{0.1}Mn_{0.1}O₂ (also referred to as NCM811 for short)), a lithium nickel cobalt aluminum oxide (for example, LiNi_{0.85}Co_{0.15}Al_{0.05}O₂), and modified compounds thereof. An example of the lithium-containing phosphate of the olivine structure may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by: dispersing the above components for preparing the positive electrode plate, for example, the positive electrode active material, the conductive agent, the binder, and any other components, in a solvent (for example, N-methylpyrrolidone) to form a positive electrode slurry; and coating a positive electrode current collector with the positive electrode slurry, followed by drying, cold pressing, and other processes, to obtain the positive electrode plate.

### [Negative electrode plate]

The negative electrode plate includes a negative electrode current collector and a negative electrode film layer arranged on at least one surface of the negative electrode current collector, and the negative electrode film layer includes a negative electrode active material.

For example, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, a copper foil can be used as the metal foil. The composite current collector may include a polymer material substrate and a metal layer formed on at least one surface of the polymer material substrate. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material used for a battery and well known in the art. For example, the negative electrode active material may include at least one of the following materials: artificial graphite, natural graphite, soft carbon, hard carbon, a silicon-based material, a tin-based material, lithium titanate, or the like. The silicon-based material may include at least one of elemental silicon, a silicon oxide, a silicon-carbon composite, a silicon-nitrogen composite, and a silicon alloy. The tin-based material may include at least one of elemental tin, a tin oxide compound, and a tin alloy. However, this application is not limited to such materials, and may alternatively use other conventional materials that can be used as negative electrode active materials for batteries. Only one or a combination of two or more of these negative electrode active materials may be used.

In some embodiments, the negative electrode film layer optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally includes a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer optionally includes another auxiliary agent such as a thickener (for example, sodium carboxymethyl cellulose (CMC-Na)).

In some embodiments, the negative electrode plate can be prepared by: dispersing the above components for preparing the negative electrode plate, for example, the negative electrode active material, the conductive agent, the binder, and any other components, in a solvent (for example, deionized water) to form a negative electrode slurry; and coating a negative electrode current collector with the negative electrode slurry, followed by drying, cold pressing, and other processes, to obtain the negative electrode plate.

### [Separator]

In some embodiments, the battery cell further includes a separator. There are no special limitations on a type of the separator in this application, and any well-known porous separator with good chemical stability and mechanical stability can be selected.

In some embodiments, a material of the separator may include at least one of glass fiber, non-woven fabric, polyethylene, polypropylene, and polyvinylidene fluoride. The separator can be a single-layer film or a multilayer composite film, without special limitations. When the separator is a multilayer composite film, materials of layers may be the same or different, without special limitations.

In some embodiments, an electrode assembly may be manufactured by a positive electrode plate, a negative electrode plate, and a separator through a winding process or a laminating process.

In some embodiments, the battery cell may include an outer packaging. The outer packaging can be used for packaging the above electrode assembly and electrolyte solution.

In some embodiments, the outer packaging of the battery cell may be a hard shell such as a hard plastic shell, an aluminum shell, or a steel shell. Alternatively, the outer packaging of the battery cell may be a soft package such as a pouch-type soft package. A material of the soft package may be plastic, and examples of plastic may include polypropylene, polybutylene terephthalate, polybutylene succinate, and the like.

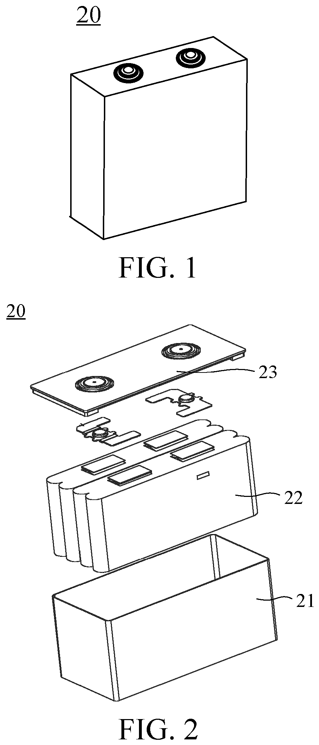

The shape of the battery cell is not particularly limited in this application, and the battery cell may be cylindrical, prismatic, or of any other shape. FIG. 1 shows a prismatic battery cell 20 as an example.

In some embodiments, referring to FIG. 2, an outer packaging may include a housing 21 and a cover plate 23. The housing 21 may include a bottom plate and a side plate connected to the bottom plate, and an accommodating cavity is defined by the bottom plate and the side plate. The housing 21 has an opening in communication with the accommodating cavity, and the cover plate 23 can cover the opening to close the accommodating cavity. An electrode assembly 22 may be formed by a positive electrode plate, a negative electrode plate, and a separator through a winding process or a laminating process. The electrode assembly 22 is enclosed in the accommodating cavity. An electrolyte solution infiltrates into the electrode assembly 22. The number of electrode assemblies 22 contained in the battery cell 20 may be one or more, and may be selected by a person skilled in the art according to actual requirements.

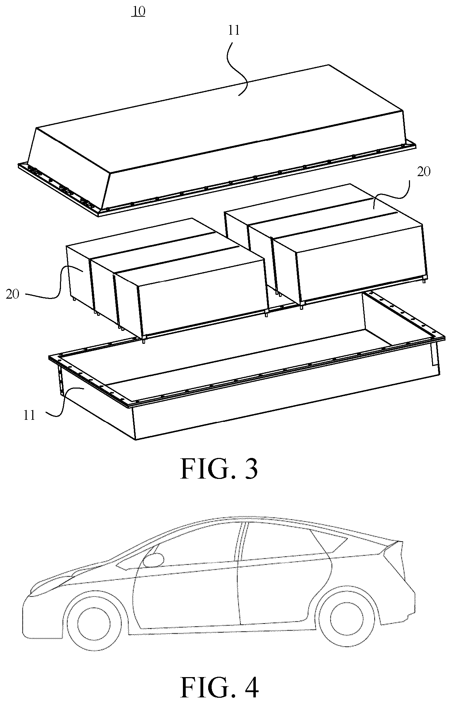

In some embodiments, a battery 10 may include a plurality of battery cells 20. For example, FIG. 3 is a schematic structural diagram of a battery 10 in an embodiment of this application. The battery 10 may include a plurality of battery cells 20. The battery 10 may further include a box 11. The box 11 has a hollow structure inside, and the plurality of battery cells 20 are accommodated in the box 11. For example, the plurality of battery cells 20 are connected in series, in parallel, or in series-parallel, and are then placed in the box 11.

Optionally, the battery 10 may further include other structures, which are not described one by one in detail herein. For example, the battery 10 may further include a bus component. The bus component is configured to implement electrical connection between the plurality of battery cells 20, such as parallel connection, series connection, or series-parallel connection. Specifically, the bus component can implement electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism passing through the box 11. Optionally, the electrically conductive mechanism may be part of the bus component.

According to different power requirements, the number of battery cells 20 can be set to any value. The plurality of battery cells 20 may be connected in series, in parallel, or in series-parallel to achieve large capacity or power. Since the number of battery cells 20 included in each battery 10 may be large, in order to facilitate mounting, the battery cells 20 may be arranged in groups, and each group of battery cells 20 constitutes a battery module. The number of battery cells 20 included in the battery module is not limited, and can be set according to requirements. The battery may include a plurality of battery modules, and the battery modules may be connected in series, in parallel, or in series-parallel.

In addition, this application further provides a power consuming apparatus. The power consuming apparatus includes at least one of the battery cell, the battery module, or the battery provided in this application. The battery cell, the battery module, or the battery may be used as a power source of the power consuming apparatus, or may be used as an energy storage unit of the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

The battery cell, the battery module, or the battery may be selected according to use requirements of the power consuming apparatus.

FIG. 4 shows an example of a power consuming apparatus. The power consuming apparatus may be a pure electric vehicle, a hybrid electric vehicle, a plug-in hybrid electric vehicle, or the like. To meet requirements of the power consuming apparatus for high power and high energy density of a battery cell, a battery or a battery module may be used.

Another example of the apparatus may be a mobile phone, a tablet, a laptop, or the like. The apparatus usually needs to be light and thin, and the battery cell may be used as a power source.

### [Example]

The following describes examples of this application. The embodiments described below are exemplary and are only intended to explain this application, and cannot be understood as limitations on this application. If the specific technology or conditions are not specified in the examples, the technology or conditions described in the literature in this field or the product manual shall be followed. The reagents or instruments used without specifying the manufacturer are all conventional products that can be obtained through market procurement.

### (1) Preparation of compounds

Preparation of compound 1

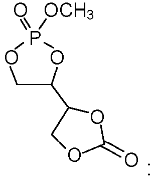

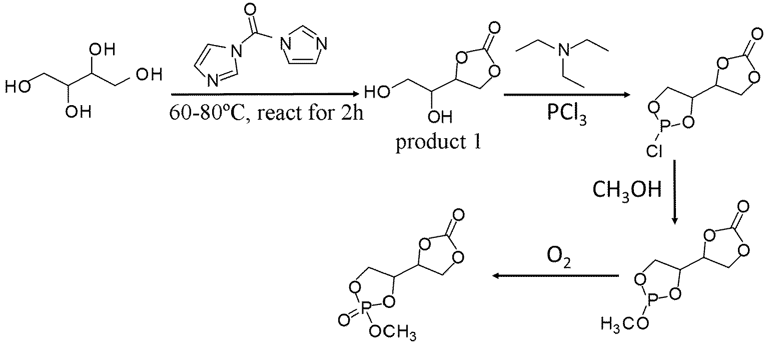

Specific steps: in a three-neck flask, carbonyldiimidazole (1 mol) was added, acetonitrile was used as a solvent, erythritol (1.1 mol) was added, and the reaction was performed at a reaction temperature of 60°C to 80°C for 2 h. After the reaction was completed, excess erythritol was precipitated, and separation was performed to obtain product 1. Then, in a tetrahydrofuran (THF) solution, product 1 (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then methanol (1.1 mol) was slowly added dropwise at 0°C, and the reaction was performed for 2 h at room temperature. After the reaction was completed, oxygen was introduced for oxidation, and the reaction was performed for 48 h at room temperature. Finally, column chromatography separation was performed to obtain compound 1.

Preparation of compound 2 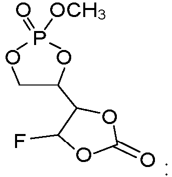 on the basis of the above compound 1 obtained by synthesis, compound 1 was added into a PFA reaction tank, a mixed gas of fluorine and nitrogen (where a volume ratio of fluorine to nitrogen is 3:7) was introduced at 50°C, gassing was performed at a rate of 350 ml/min, and after reacting for 0.5 h, column chromatography separation was performed on the reaction product to obtain compound 2.

Preparation of compound 3 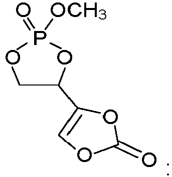 on the basis of the above compound 1 obtained by synthesis, in a three-neck flask, compound 1 (0.1 mol) was added, a platinum-carbon additive (1 g) was added, hydrogen peroxide (0.1 mol) was added dropwise at 50°C, the reaction was performed for 1 h, and column chromatography separation was performed on the reaction product to obtain compound 3.

Preparation of compound 4

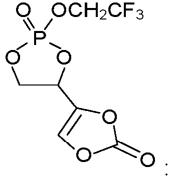

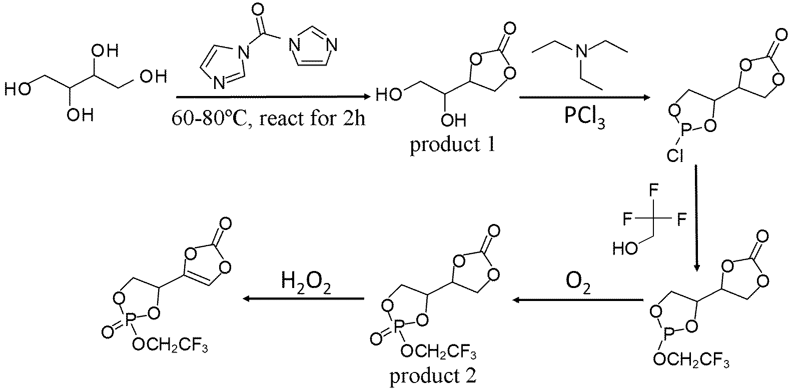

Specific steps: in a three-neck flask, carbonyldiimidazole (1 mol) was added, acetonitrile was used as a solvent, erythritol (1.1 mol) was added, and the reaction was performed at a reaction temperature of 60°C to 80°C for 2 h. After the reaction was completed, excess erythritol was precipitated, and separation was performed to obtain product 1. Then, in a tetrahydrofuran (THF) solution, product 1 (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then trifluoroethanol (1.1 mol) was slowly added dropwise at 0°C, and the reaction was performed for 2 h at room temperature. After the reaction was completed, oxygen was introduced for oxidation, and the reaction was performed for 48 h at room temperature. Column chromatography separation was performed to obtain product 2. In a three-neck flask, product 2 (0.1 mol) was added, a platinum-carbon additive (1 g) was added, and hydrogen peroxide (0.1 mol) was added dropwise at 50°C. After the dropwise addition was completed, the reaction was performed for 1 h, and then column chromatography separation was performed to obtain compound 4.

Preparation of compound 5

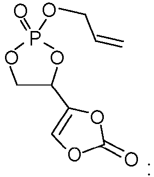

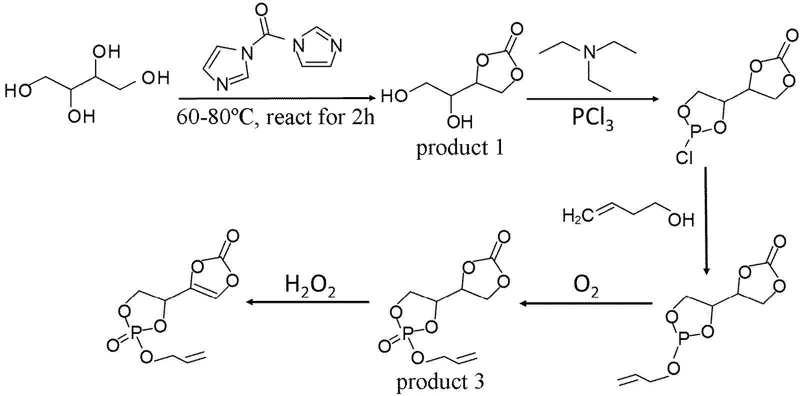

Specific steps: in a three-neck flask, carbonyldiimidazole (1 mol) was added, acetonitrile was used as a solvent, erythritol (1.1 mol) was added, and the reaction was performed at a reaction temperature of 60°C to 80°C for 2 h. After the reaction was completed, excess erythritol was precipitated, and separation was performed to obtain product 1. Then, in a tetrahydrofuran (THF) solution, product 1 (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then allyl methanol (1.1 mol) was slowly added dropwise at 0°C, and the reaction was performed for 2 h at room temperature. After the reaction was completed, oxygen was introduced for oxidation, and the reaction was performed for 48 h at room temperature. Column chromatography separation was performed to obtain product 3. In a three-neck flask, product 3 (0.1 mol) was added, a platinum-carbon additive (1 g) was added, and hydrogen peroxide (0.1 mol) was added dropwise at 50°C. After the dropwise addition was completed, the reaction was performed for 1 h, and then column chromatography separation was performed to obtain compound 5.

Preparation of compound 6

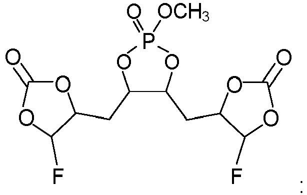

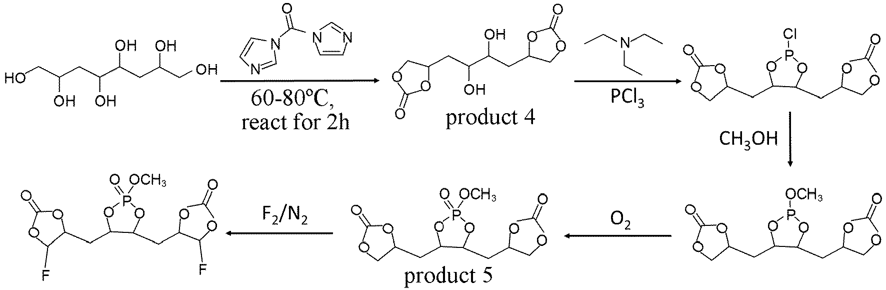

Specific steps: in a three-neck flask, carbonyldiimidazole (1 mol) was added, acetonitrile was used as a solvent, 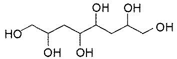 (1.1 mol) was added, and the reaction was performed at a reaction temperature of 60°C to 80°C for 2 h. After the reaction was completed, excess erythritol was precipitated, and separation was performed to obtain product 4. Then, in a tetrahydrofuran (THF) solution, product 4 (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then methanol (1.1 mol) was slowly added dropwise at 0°C, and the reaction was performed for 2 h at room temperature. After the reaction was completed, oxygen was introduced for oxidation, and the reaction was performed for 48 h at room temperature. Finally, column chromatography separation was performed to obtain product 5. Product 5 was added into a PFA reaction tank, a mixed gas of fluorine and nitrogen (where a volume ratio of fluorine to nitrogen is 3:7) was introduced at 50°C, gassing was performed at a rate of 350 ml/min, and after reacting for 0.5 h, column chromatography separation was performed on the reaction product to obtain compound 6.

Preparation of compound 7

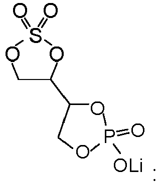

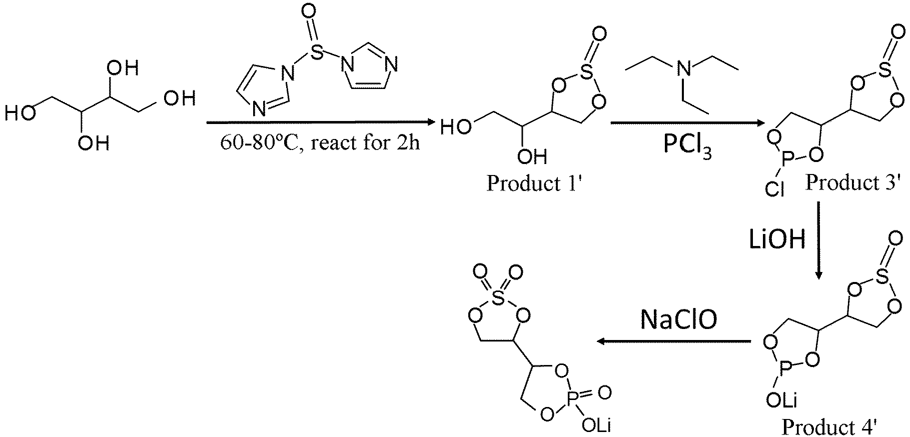

Specific steps: in a three-neck flask, sulfurylimidazole (1 mol) was added, acetonitrile was used as a solvent, erythritol (1.1 mol) was added, and the reaction was performed at a reaction temperature of 60°C to 80°C for 2 h. After the reaction was completed, excess sulfurylimidazole was precipitated, and separation was performed to obtain product 1'. Then, in a tetrahydrofuran (THF) solution, product 1' (1 mol) and triethylamine (2.1 mol) were added, and PCl₃ (1.05 mol) was slowly added dropwise at 0°C, and then the reaction was performed for 2 h at room temperature to obtain product 3'. Product 3' (0.1 mol) was added into a three-neck flask, acetonitrile was used as a solvent, triethylamine (0.11 mol) was added, lithium hydroxide was added, and the reaction was performed for 1 h at room temperature, to obtain Product 4' by recrystallization. Product 4' (0.1 mol) was added into a three-neck flask, acetonitrile was used as a solvent, ruthenium trichloride was added, and sodium hypochlorite was added dropwise at 15°C in a nitrogen atmosphere. After the reaction was performed for 10 min, column chromatography separation was performed on the reaction product to obtain compound 7.

Preparation of compound 8

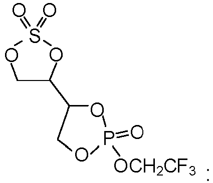

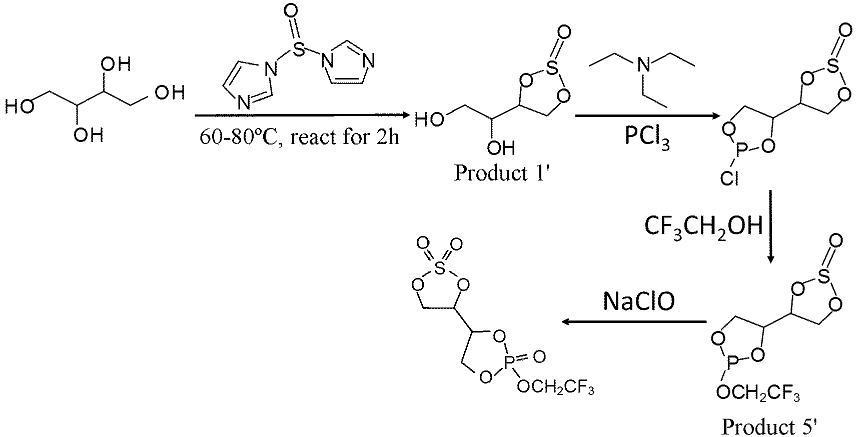

Specific steps: in a three-neck flask, sulfurylimidazole (1 mol) was added, acetonitrile was used as a solvent, erythritol (1.1 mol) was added, and the reaction was performed at a reaction temperature of 60°C to 80°C for 2 h. After the reaction was completed, excess sulfurylimidazole was precipitated, and separation was performed to obtain product 1'. Then, in a tetrahydrofuran (THF) solution, product 1' (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then trifluoroethanol (1.1 mol) was slowly added dropwise at 0°C, and the reaction was performed for 2 h at room temperature to obtain product 5'. Product 5' (0.1 mol) was added into a three-neck flask, acetonitrile was used as a solvent, ruthenium trichloride was added, and sodium hypochlorite was added dropwise at 15°C in a nitrogen atmosphere. After the reaction was performed for 10 min, column chromatography separation was performed on the reaction product to obtain compound 8.

Preparation of compound 9

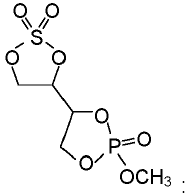

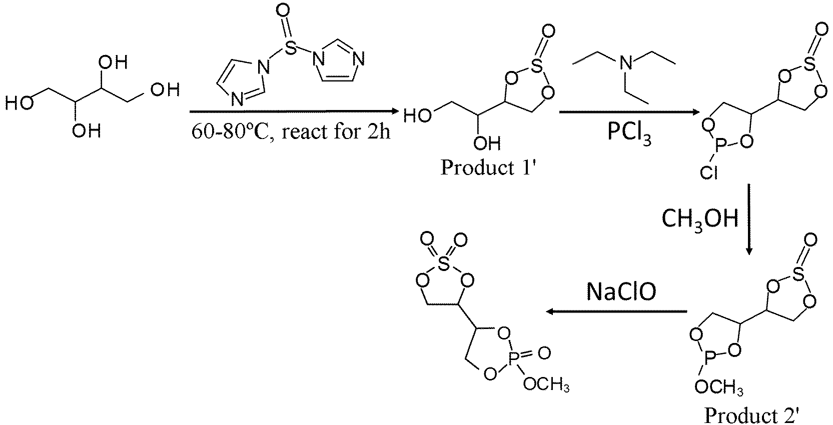

Specific steps: in a three-neck flask, sulfurylimidazole (1 mol) was added, acetonitrile was used as a solvent, erythritol (1.1 mol) was added, and the reaction was performed at a reaction temperature of 60°C to 80°C for 2 h. After the reaction was completed, excess sulfurylimidazole was precipitated, and separation was performed to obtain product 1'. Then, in a tetrahydrofuran (THF) solution, product 1' (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then methanol (1.1 mol) was slowly added dropwise at 0°C, and the reaction was performed for 2 h at room temperature to obtain product 2'. Product 2' (0.1 mol) was added into a three-neck flask, acetonitrile was used as a solvent, ruthenium trichloride was added, and sodium hypochlorite was added dropwise at 15°C in a nitrogen atmosphere. After the reaction was performed for 10 min, column chromatography separation was performed on the reaction product to obtain compound 9.

Preparation of compound 10

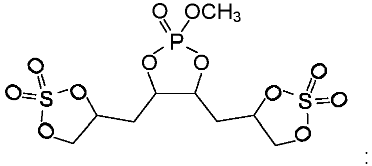

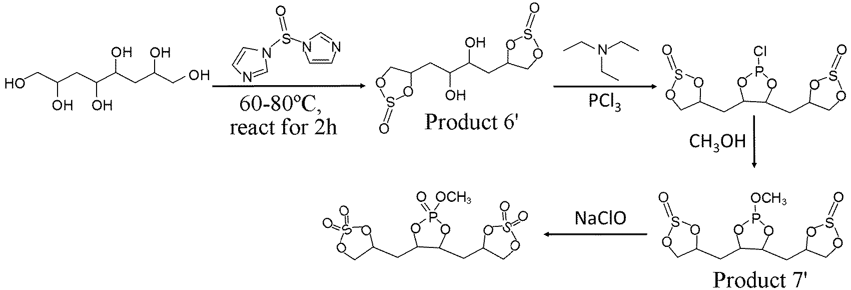

Specific steps: in a three-neck flask, sulfurylimidazole (1 mol) was added, acetonitrile was used as a solvent, 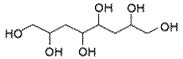 (1.1 mol) was added, and the reaction was performed at a reaction temperature of 60°C to 80°C for 2 h. After the reaction was completed, excess sulfurylimidazole was precipitated, and separation was performed to obtain product 6'. Then, in a tetrahydrofuran (THF) solution, product 6' (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then methanol (1.1 mol) was slowly added dropwise at 0°C, and the reaction was performed for 7 h at room temperature to obtain product 2'. Product 7' (0.1 mol) was added into a three-neck flask, acetonitrile was used as a solvent, ruthenium trichloride was added, and sodium hypochlorite was added dropwise at 15°C in a nitrogen atmosphere. After the reaction was performed for 10 min, column chromatography separation was performed on the reaction product to obtain compound 10.

Preparation of compound 11

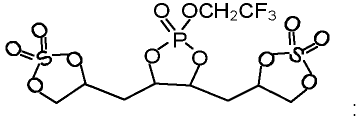

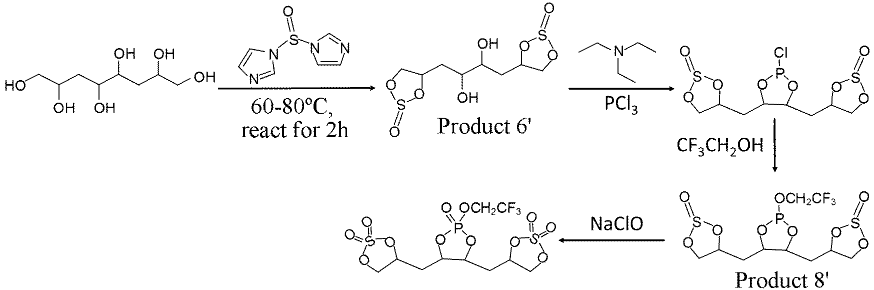

Specific steps: in a three-neck flask, sulfurylimidazole (1 mol) was added, acetonitrile was used as a solvent, 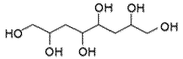 (1.1 mol) was added, and the reaction was performed at a reaction temperature of 60°C to 80°C for 2 h. After the reaction was completed, excess sulfurylimidazole was precipitated, and separation was performed to obtain product 6'. Then, in a tetrahydrofuran (THF) solution, product 6' (1 mol) and triethylamine (2.1 mol) were added, and PCl₃ (1.05 mol) was slowly added dropwise at 0°C, and then the reaction was performed for 2 h at room temperature. Triethylamine hydrochloride was removed by filtration, triethylamine (1.1 mol) was further added, then trifluoroethanol (1.1 mol) was slowly added dropwise at 0°C, and the reaction was performed for 2 h at room temperature to obtain product 8'. Product 8' (0.1 mol) was added into a three-neck flask, acetonitrile was used as a solvent, ruthenium trichloride was added, and sodium hypochlorite was added dropwise at 15°C in a nitrogen atmosphere. After the reaction was performed for 10 min, column chromatography separation was performed on the reaction product to obtain compound 11.
(2) Preparation of electrolyte solution: In an argon atmosphere glove box (H₂O<0.1 ppm and O₂<0.1 ppm), organic solvents EC and EMC were uniformly mixed in a volume ratio of 3:7, and 1M lithium hexafluorophosphate (LiPF₆) was added and dissolved in the organic solvent, the first additive was added and dissolved in the organic solvent, and stirring is performed uniformly to obtain the corresponding electrolyte solution.
(3) Preparation of positive electrode plate: The positive electrode active material LiNi_{0.5}Mn_{0.38}Co_{0.12}O₂, acetylene black as the conductive agent, and polyvinylidene fluoride (PVDF) as the binder were dissolved in a solvent N-methylpyrrolidone (NMP) at a weight ratio of 96:2:2, and stirring and mixing were performed fully to obtain a positive electrode slurry. The positive electrode current collector was then uniformly coated with the positive electrode slurry, followed by drying, cold pressing, and slitting to obtain the positive electrode plate.
(4) Preparation of negative electrode plate: Artificial graphite as the active material, acetylene black as the conductive agent, styrene-butadiene rubber (SBR) as the binder, and sodium carboxymethyl cellulose (CMC) as the thickener were dissolved in the solvent deionized water at a weight ratio of 96:1.5:1.5:1 and uniformly mixed with the solvent deionized water, to prepare a negative electrode slurry. After that, a copper foil as the negative electrode current collector was coated uniformly with the negative electrode slurry, and was dried to obtain a negative electrode film. The negative electrode film was then cold-pressed and slit to obtain a negative electrode plate.
(5) Preparation of separator: A conventional polypropylene film was used as a separator.
(6) Assembly of lithium-ion battery: The positive electrode plate, the separator, and the negative electrode plate were stacked in sequence, to cause the separator to isolate the positive electrode plate and the negative electrode plate from each other. The positive electrode plate, the separator, and the negative electrode plate were then wound to obtain an electrode assembly. The electrode assembly was placed in a battery housing and dried, and after that, the electrolyte solution was injected into the battery housing, and then processes such as formation and standing were performed to obtain a lithium-ion battery.

### [Example 1]

The first additive was compound 1. According to the above method for preparing an electrolyte solution, an electrolyte solution 1 containing compound 1 was prepared, and a mass content of compound 1 in the electrolyte solution 1 was 1%. Then according to the above method for assembling a lithium-ion battery, a lithium-ion battery 1 containing the electrolyte solution 1 was prepared, corresponding to example 1.

### [Example 2]

The first additive was compound 2. According to the above method for preparing an electrolyte solution, an electrolyte solution 2 containing compound 2 was prepared, and a mass content of compound 2 in the electrolyte solution 2 was 1%. Then according to the above method for assembling a lithium-ion battery, a lithium-ion battery 2 containing the electrolyte solution 2 was prepared, corresponding to example 2.

### [Example 3]

The first additive was compound 3. According to the above method for preparing an electrolyte solution, an electrolyte solution 3 containing compound 3 was prepared, and a mass content of compound 3 in the electrolyte solution 3 was 1%. Then according to the above method for assembling a lithium-ion battery, a lithium-ion battery 3 containing the electrolyte solution 3 was prepared, corresponding to example 3.

### [Example 4]

The first additive was compound 4. According to the above method for preparing an electrolyte solution, an electrolyte solution 4 containing compound 4 was prepared, and a mass content of compound 4 in the electrolyte solution 4 was 1%. Then according to the above method for assembling a lithium-ion battery, a lithium-ion battery 4 containing the electrolyte solution 4 was prepared, corresponding to example 4.

### [Example 5]

The first additive was compound 5. According to the above method for preparing an electrolyte solution, an electrolyte solution 5 containing compound 5 was prepared, and a mass content of compound 5 in the electrolyte solution 5 was 1%. Then according to the above method for assembling a lithium-ion battery, a lithium-ion battery 5 containing the electrolyte solution 5 was prepared, corresponding to example 5.

### [Example 6]

The first additive was compound 6. According to the above method for preparing an electrolyte solution, an electrolyte solution 6 containing compound 6 was prepared, and a mass content of compound 6 in the electrolyte solution 6 was 1%. Then according to the above method for assembling a lithium-ion battery, a lithium-ion battery 6 containing the electrolyte solution 6 was prepared, corresponding to example 6.

### [Examples 7 and 8]

Examples 7 and 8 were different from example 4 in that the masses of compound 4 added to the electrolyte solutions were different, and in the prepared electrolyte solution 7 and electrolyte solution 8, the mass contents of compound 4 were 10% and 0.0001% respectively. Then according to the above method for assembling a lithium-ion battery, a lithium-ion battery 7 containing the electrolyte solution 7 and a lithium-ion battery 8 containing the electrolyte solution 8 were prepared, corresponding to examples 7 and 8.

### [Example 9]

Example 9 was different from example 4 in that on the basis of example 4, SO₂ with a mass content of 20 ppm was further added, and a lithium-ion battery 9 was prepared, corresponding to example 9.

### [Example 10]

Example 10 was different from example 9 in that on the basis of example 9, 2,6-di-tert-butyl-p-cresol with a mass content of 5 ppm was further added as a polymerization inhibitor, and a lithium-ion battery 10 was prepared, corresponding to example 10.

### [Example 11]

Example 11 was different from example 10 in that on the basis of example 10, difluoroethylene carbonate (DFEC) with a mass content of 1% was further added as a polymerization inhibitor, and a lithium-ion battery 11 was prepared, corresponding to example 11.

### [Example 12]

Example 12 was different from example 4 in that on the basis of example 4, SO₂ with a mass content of 900 ppm was further added, and a lithium-ion battery 12 was prepared, corresponding to example 12.

### [Example 13]

Example 13 was different from example 9 in that on the basis of example 9, 2,6-di-tert-butyl-p-cresol with a mass content of 30 ppm was further added as a polymerization inhibitor, and a lithium-ion battery 13 was prepared, corresponding to example 13.

### [Example 14]

The first additive was compound 7. According to the above method for preparing an electrolyte solution, an electrolyte solution 14 containing compound 7 was prepared, and a mass content of compound 7 in the electrolyte solution 14 was 1%. Then according to the above method for assembling a lithium-ion battery, a lithium-ion battery 14 containing the electrolyte solution 14 was prepared, corresponding to example 14.

### [Example 15]

The first additive was compound 8. According to the above method for preparing an electrolyte solution, an electrolyte solution 15 containing compound 8 was prepared, and a mass content of compound 8 in the electrolyte solution 15 was 1%. Then according to the above method for assembling a lithium-ion battery, a lithium-ion battery 15 containing the electrolyte solution 15 was prepared, corresponding to example 15.

### [Example 16]

The first additive was compound 9. According to the above method for preparing an electrolyte solution, an electrolyte solution 16 containing compound 9 was prepared, and a mass content of compound 9 in the electrolyte solution 16 was 1%. Then according to the above method for assembling a lithium-ion battery, a lithium-ion battery 16 containing the electrolyte solution 16 was prepared, corresponding to example 16.

### [Example 17]

The first additive was compound 10. According to the above method for preparing an electrolyte solution, an electrolyte solution 17 containing compound 17 was prepared, and a mass content of compound 10 in the electrolyte solution 17 was 1%. Then according to the above method for assembling a lithium-ion battery, a lithium-ion battery 17 containing the electrolyte solution 17 was prepared, corresponding to example 17.

### [Example 18]

The first additive was compound 11. According to the above method for preparing an electrolyte solution, an electrolyte solution 18 containing compound 11 was prepared, and a mass content of compound 11 in the electrolyte solution 18 was 1%. Then according to the above method for assembling a lithium-ion battery, a lithium-ion battery 18 containing the electrolyte solution 18 was prepared, corresponding to example 18.

### [Examples 19 and 20]

Examples 19 and 20 were different from example 16 in that the masses of compound 9 added to the electrolyte solutions were different, and in the prepared electrolyte solution 19 and electrolyte solution 20, the mass contents of compound 9 were 10% and 0.0001% respectively. Then according to the above method for assembling a lithium-ion battery, a lithium-ion battery 19 containing the electrolyte solution 19 and a lithium-ion battery 20 containing the electrolyte solution 20 were prepared, corresponding to examples 19 and 20 respectively.

### [Example 21]

Example 21 was different from example 16 in that on the basis of example 16, SO₂ with a mass content of 20 ppm was further added, and a lithium-ion battery 21 was prepared, corresponding to example 21.

### [Example 22]

Example 22 was different from example 21 in that on the basis of example 21, benzenediol with a mass content of 5 ppm was further added as a polymerization inhibitor, and a lithium-ion battery 22 was prepared, corresponding to example 22.

### [Example 23]

Example 23 was different from example 22 in that on the basis of example 22, ethylene sulfate (DTD) with a mass content of 1% was further added as a polymerization inhibitor, and a lithium-ion battery 23 was prepared, corresponding to example 23.

### [Example 24]

Example 24 was different from example 16 in that on the basis of example 16, CO₂ with a mass content of 20 ppm was further added, and a lithium-ion battery 24 was prepared, corresponding to example 24.

### [Example 25]

Example 25 was different from example 16 in that on the basis of example 16, SO₂ with a mass content of 900 ppm was further added, and a lithium-ion battery 25 was prepared, corresponding to example 25.

### [Example 26]

Example 26 was different from example 22 in that, benzenediol with a mass content of 30 ppm was added to example 26 as a polymerization inhibitor, and a lithium-ion battery 26 was prepared, corresponding to example 26.

### [Comparative example 1]

The first additive was VC. According to the above method for preparing an electrolyte solution, an electrolyte solution 1' containing VC was prepared, and a mass content of VC in the electrolyte solution 1' was 1%. Then according to the above method for assembling a lithium-ion battery, a lithium-ion battery 1' containing the electrolyte solution 1' was prepared, corresponding to comparative example 1.

### [Comparative example 2]

The first additive was DTD. According to the above method for preparing an electrolyte solution, an electrolyte solution 2' containing DTD was prepared, and a mass content of DTD in the electrolyte solution 2' was 1%. Then according to the above method for assembling a lithium-ion battery, a lithium-ion battery 2' containing the electrolyte solution 2' was prepared, corresponding to comparative example 2.

Details of product parameters of different examples were shown in Table 1.

**Table 1: Product parameters of comparative examples and different examples**

| Serial number | First additive | Mass content of first additive /% | Mass content of SO₂ /ppm | Mass content of CO₂ /ppm | Mass content of polymerization inhibitor /ppm | Mass content of third additive | Acidity value of electrolyte solution /ppm |
|---|---|---|---|---|---|---|---|
| Comparative example 1 | VC | 1 | / | / | / | / | 18 |
| Comparative example 2 | DTD | 1 | / | / | / | / | 18 |
| Example 1 | Compound 1 | 1 | / | / | / | / | 18 |
| Example 2 | Compound 2 | 1 | / | / | / | / | 18 |
| Example 3 | Compound 3 | 1 | / | / | / | / | 18 |
| Example 4 | Compound 4 | 1 | / | / | / | / | 18 |
| Example 5 | Compound 5 | 1 | / | / | / | / | 18 |
| Example 6 | Compound 6 | 1 | / | / | / | / | 18 |
| Example 7 | Compound 4 | 10 | / | / | / | / | 18 |
| Example 8 | Compound 4 | 0.0001 | / | / | / | / | 18 |
| Example 9 | Compound 4 | 1 | 20 | / | / | / | 18 |
| Example 10 | Compound 4 | 1 | 20 | / | 5 | / | 18 |
| Example 11 | Compound 4 | 1 | 20 | / | 5 | DFEC, 1% | 18 |
| Example 12 | Compound 4 | 1 | 900 | / | / | / | 18 |
| Example 13 | Compound 4 | 1 | 20 | / | 30 | / | 18 |
| Example 14 | Compound 7 | 1 | / | / | / | / | 18 |
| Example 15 | Compound 8 | 1 | / | / | / | / | 18 |
| Example 16 | Compound 9 | 1 | / | / | / | / | 18 |
| Example 17 | Compound 10 | 1 | / | / | / | / | 18 |
| Example 18 | Compound 11 | 1 | / | / | / | / | 18 |
| Example 19 | Compound 9 | 10 | / | / | / | / | 18 |
| Example 20 | Compound 9 | 0.0001 | / | / | / | / | 18 |
| Example 21 | Compound 9 | 1 | 20 | / | / | / | 18 |
| Example 22 | Compound 9 | 1 | 20 | / | 5 | / | 18 |
| Example 23 | Compound 9 | 1 | 20 | / | 5 | DTD, 1% | 18 |
| Example 24 | Compound 9 | 1 | / | 20 | / | / | 18 |
| Example 25 | Compound 9 | 1 | 900 | / | / | / | 18 |
| Example 26 | Compound 9 | 1 | 20 | / | 30 | / | 18 |

Next, the test processes of the relevant parameters are described.

### 1. Test of storage performance of lithium-ion battery

At 25°C, the lithium-ion battery was charged to 4.5 V at a constant current of 0.5 C, and then charged at a constant voltage of 4.5 V until the current was less than 0.05 C. Then the lithium-ion battery was stored at 60°C, and taken out every 5 days for full charge and then stored. When the capacity decayed to 80%, the test was stopped, and the high-temperature storage time was recorded.

### 2. Test of cycle performance of lithium-ion battery

At 45°C, the lithium-ion battery was charged to 4.5 V at a constant current of 1 C, and then charged at a constant voltage of 4.5 V until the current was less than 0.05 C. Then the lithium-ion battery was discharged to 2.8 V at a constant current of 1 C. This is a charge and discharge process. The charging and discharging were repeated in this way, and the number of cycles was calculated when the capacity retention rate of the lithium-ion was 80%.

Capacity retention rate (%) of the lithium-ion battery after n cycles = (discharge capacity after the nth cycle/discharge capacity after the first cycle)×100%.

Battery performance tests were performed on the prepared comparative examples 1-2 and examples 1-26 respectively according to the above methods, and details of results were shown in Table 2.

**Table 2: Performance test results of comparative examples and different examples**

| Serial number | Number of cycles with a capacity retention rate of 80% at 45°C | Total number of storage days when the capacity decayed from the initial state to 80% at 60°C |
|---|---|---|
| Comparative example 1 | 35 | 5 |
| Comparative example 2 | 60 | 15 |
| Example 1 | 710 | 155 |
| Example 2 | 770 | 160 |
| Example 3 | 769 | 160 |
| Example 4 | 859 | 175 |
| Example 5 | 814 | 170 |
| Example 6 | 784 | 170 |
| Example 7 | 808 | 190 |
| Example 8 | 648 | 145 |
| Example 9 | 940 | 190 |
| Example 10 | 970 | 205 |
| Example 11 | 1050 | 210 |
| Example 12 | 985 | 205 |
| Example 13 | 805 | 170 |
| Example 14 | 920 | 190 |
| Example 15 | 919 | 190 |
| Example 16 | 1009 | 205 |
| Example 17 | 1100 | 230 |
| Example 18 | 1089 | 230 |
| Example 19 | 958 | 195 |
| Example 20 | 798 | 175 |
| Example 21 | 1090 | 220 |
| Example 22 | 1120 | 235 |
| Example 23 | 1200 | 240 |
| Example 24 | 1070 | 215 |
| Example 25 | 1200 | 225 |
| Example 26 | 890 | 190 |

It can be seen from comparison between the results of each of comparative examples 1 to 2 and each of examples 1 to 6 that the compound including both a cyclic carbonate structure and a cyclic phosphate structure and provided in this application is added to the electrolyte solution, so that the cycle performance of the lithium-ion battery is significantly improved, and the decay rate of the cycle performance of the lithium-ion battery at high temperature is significantly reduced, thereby prolonging the service life of the lithium-ion battery and also prolonging the storage life of the lithium-ion battery.

It can be seen from comparison between the results of each of comparative examples 1 to 2 and each of examples 14 to 18 that the compound including both a cyclic sulfate structure and a cyclic phosphate structure and provided in this application is added to the electrolyte solution, so that the cycle performance of the lithium-ion battery is significantly improved, and the decay rate of the cycle performance of the lithium-ion battery at high temperature is significantly reduced, thereby prolonging the service life of the lithium-ion battery and also prolonging the storage life of the lithium-ion battery.

It can be seen from comparison between the results of examples 1 to 6 that a fluorine atom or an alkenyl group is introduced to the structure of the compound, so that the interface film formed by the copolymerization of the compound has better performance, which can further improve the cycle performance, service life, and storage life of the lithium-ion battery.

It can be seen from comparison between the results of example 4 and examples 7 and 8 and comparison between the results of example 16 and examples 19 and 20 that the mass content of the first additive in the electrolyte solution should be neither too high nor too low, and the mass content of the first additive in the electrolyte solution is controlled within an appropriate range, so that the cycle stability and service life of the battery can be further improved.

It can be seen from comparison between the results of example 4 and examples 9 and 12 and comparison between the results of example 16 and examples 21, 24, and 25 that the addition of an appropriate amount of SO₂ or CO₂ to the electrolyte solution can facilitate forming of an inorganic-organic compact interface film containing sulfate/carbonate, and polyphosphate-polysulfate and/or polyphosphate-polycarbonate, and the interface film is more compact, to better prevent co-intercalation of other molecules in the electrolyte solution, and avoid the damage to an electrode material caused by the co-intercalation of the other molecules, thereby improving the cycle performance and service life of the lithium-ion battery.

It can be seen from comparison between the results of example 9 and examples 10 and 13 and comparison between the results of example 21 and examples 22 and 26 that an appropriate amount of polymerization inhibitor was added to the electrolyte solution, to prevent a chemical reaction from occurring between substances in the electrolyte solution under full contact during transportation of the battery to damage components of the electrolyte solution, thereby improving the cycle performance and service life of the lithium-ion battery; and an excessive amount of polymerization inhibitor affects the copolymerization reaction of the first additive, and affects the film forming of the battery in the formation stage, so that a stable interface film cannot be formed between the electrode plate and the electrolyte solution, thereby affecting the cycle performance and storage life of the lithium-ion battery.

It can be seen from comparison between the results of example 10 and example 11 that DFEC is added to the electrolyte solution, and DFEC forms monomer reactive free radicals under an electrochemical reaction, thereby improving a reaction conversion rate of copolymerizing the first additive to form a copolymer. In this way, an interface film of the copolymer initially formed has a larger molecular weight and is more compact, which can improve the cycle performance and service life of the lithium-ion battery.

It can be seen from comparison between the results of example 22 and example 23 that DTD is added to the electrolyte solution, and DTD forms monomer reactive free radicals under an electrochemical reaction, thereby improving a reaction conversion rate of copolymerizing the first additive to form a copolymer. In this way, an interface film of the copolymer initially formed has a larger molecular weight and is more compact, which can improve the cycle performance and service life of the lithium-ion battery.

It should be noted that this application is not limited to the foregoing embodiments. The foregoing embodiments are exemplary only, and any embodiment having substantially the same technical idea and the same effects within the scope of the technical solutions of this application shall fall within the technical scope of this application. In addition, other embodiments obtained by making various modifications that can be conceived by a person skilled in the art to the embodiments or obtained by combining some of the constituent elements of the embodiments without departing from the scope of the subject matter of this application shall also fall within the scope of this application.

## Claims

1. An electrolyte solution, comprising:
a first additive, wherein the first additive comprises at least one of a compound containing at least groups represented by formula (I) and formula (II), and a compound containing at least groups represented by formula (I) and formula (III): 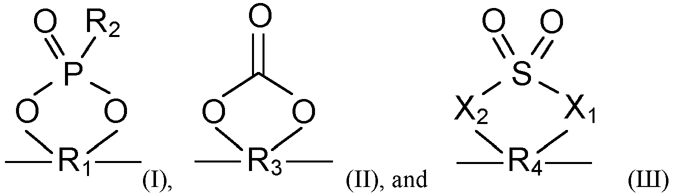
wherein R₁, R₃, and R₄ each independently comprise at least one of a saturated hydrocarbon group or an unsaturated hydrocarbon group, R₂ comprises F, OLi, OCH₂CF₃, OCH₃, OCH₂CH₂=CH₂, OCH₂CH₂CH₂=CH₂, OSi(OCH₃)₃, OSi(OCH₂CH₂=CH₂)₃, or OSi(CH₂=CH₂)₃, X₁ and X₂ comprise O or CH₂, and X₁ and X₂ are not CH₂ simultaneously.

2. The electrolyte solution according to claim 1, wherein a mass content of the first additive in the electrolyte solution is 0.0001% to 10%, and optionally, the mass content of the first additive in the electrolyte solution is 0.01% to 5%.

3. The electrolyte solution according to claim 1 or 2, wherein the first additive comprises at least one of compounds represented by formula (IV), formula (V), formula (VI), and formula (VII): 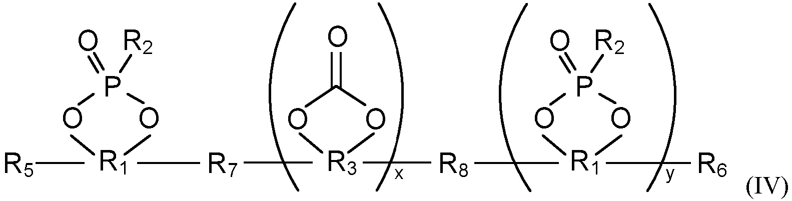 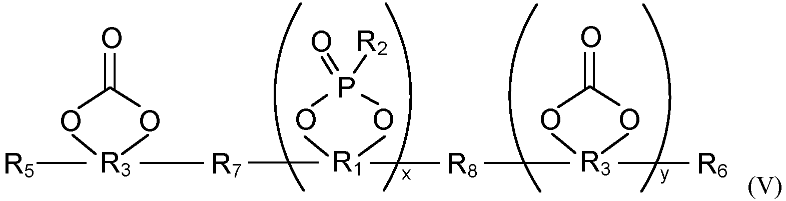 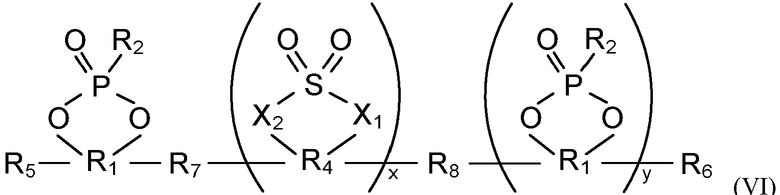 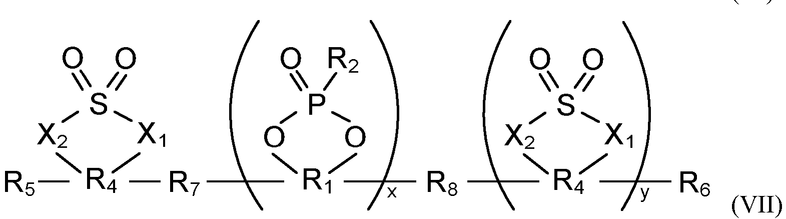 wherein R₅ and R₆ each independently comprise at least one of H, a halogen atom, a substituted hydrocarbon group or an unsubstituted hydrocarbon group, and a group containing an unsaturated double bond or triple bond, R₇ and R₈ each independently comprise at least one of a saturated hydrocarbon group or an unsaturated hydrocarbon group having 1 to 6 carbon atoms, and a single bond, a value of x is any natural number of 1 to 5, and a value of y is any natural number of 0 to 5.

4. The electrolyte solution according to claim 3, wherein R₅ and R₆ each independently comprise at least one of H, F, a straight-chain alkyl group or branched-chain alkyl group having 1 to 3 carbon atoms, a straight-chain perfluorosubstituted alkyl group or branched-chain perfluorosubstituted alkyl group having 1 to 3 carbon atoms, and a group having 1 to 3 carbon atoms and containing an unsaturated double bond.

5. The electrolyte solution according to claim 3 or 4, wherein R₇ and R₈ each independently comprise at least one of a saturated hydrocarbon group or an unsaturated hydrocarbon group having 1 to 3 carbon atoms.

6. The electrolyte solution according to any one of claims 1 to 5, wherein the first additive comprises at least one of the following substances:

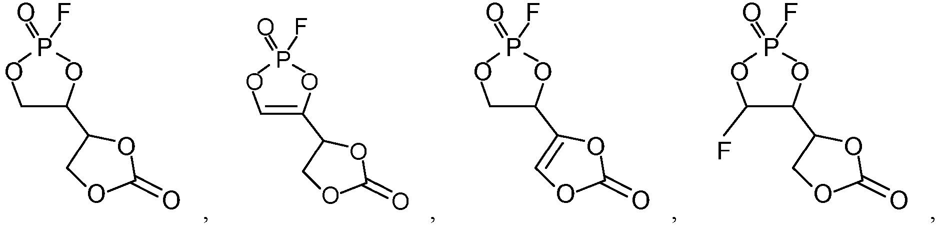

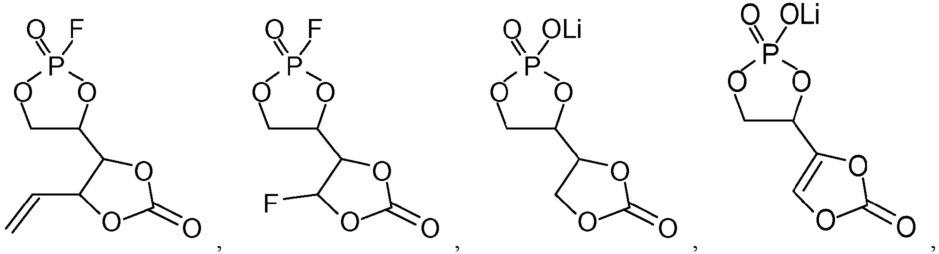

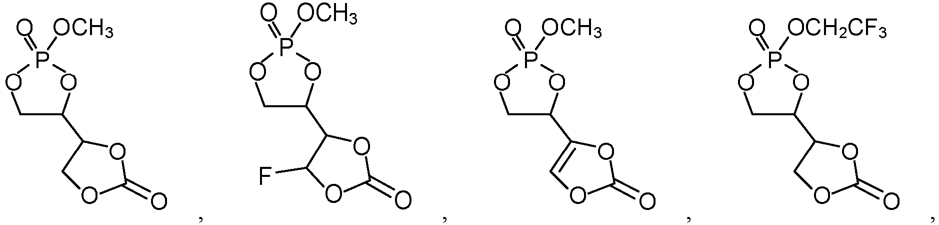

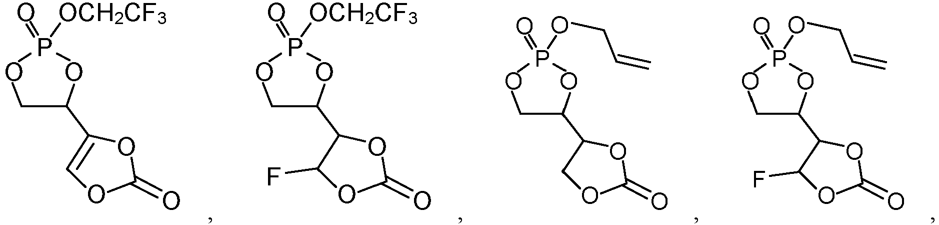

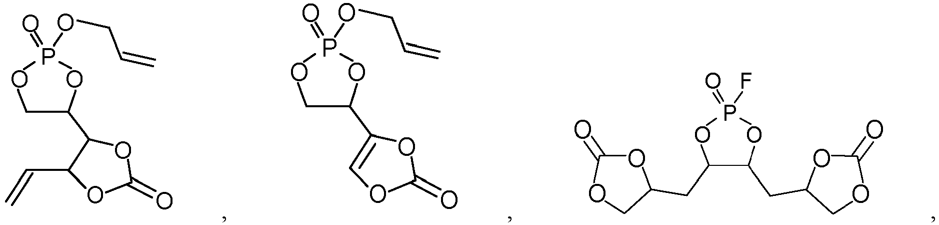

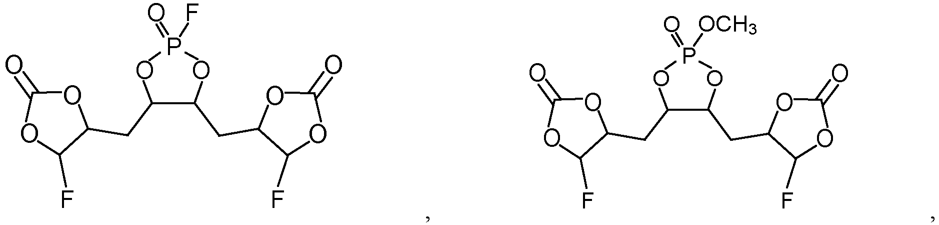

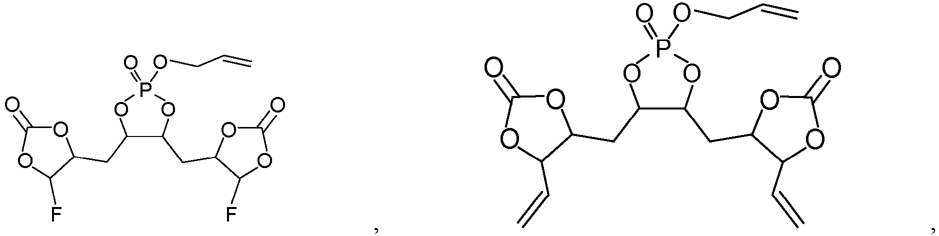

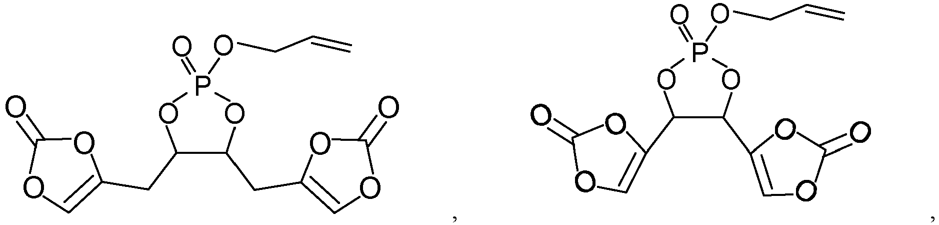

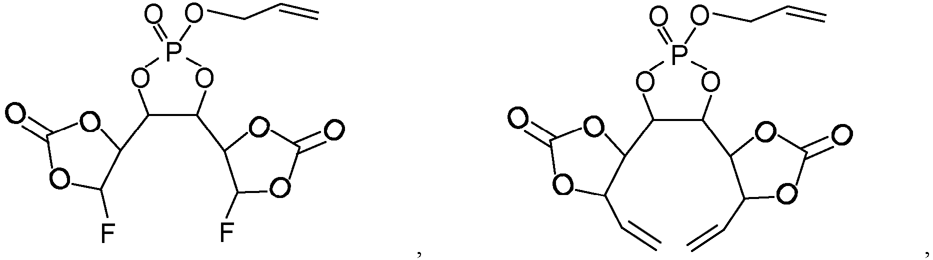

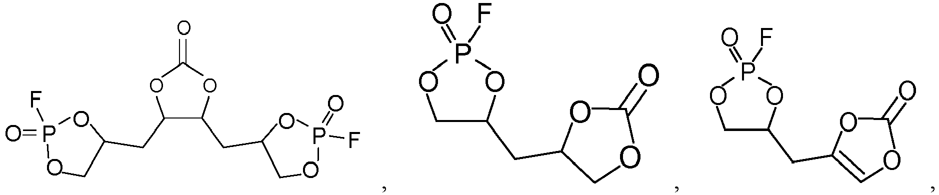

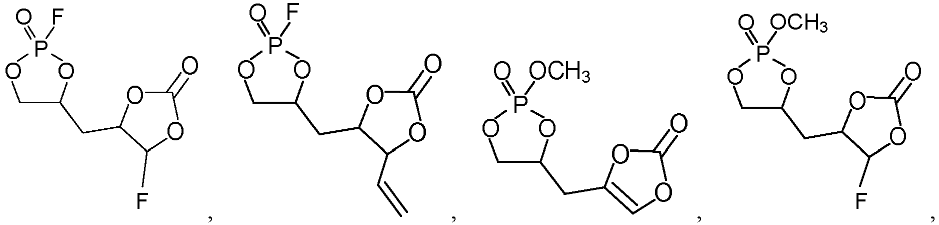

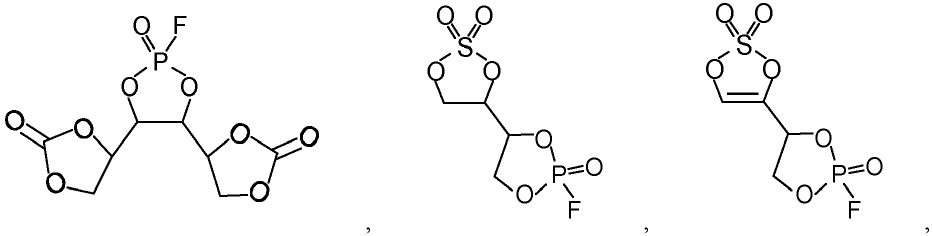

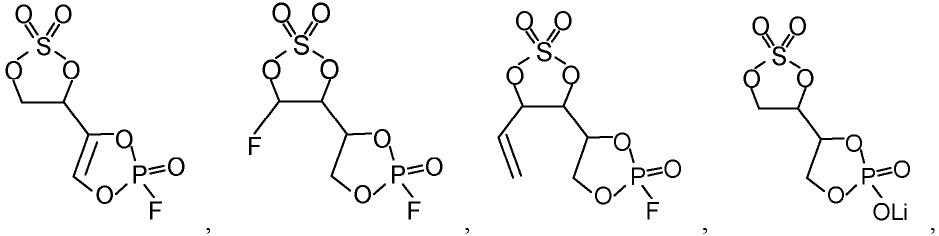

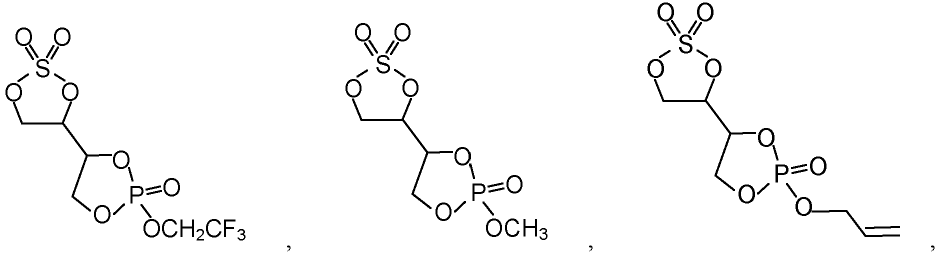

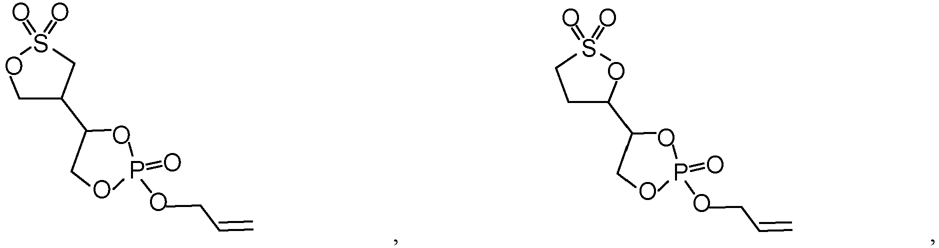

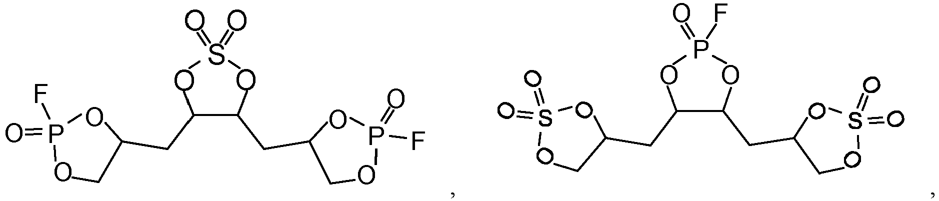

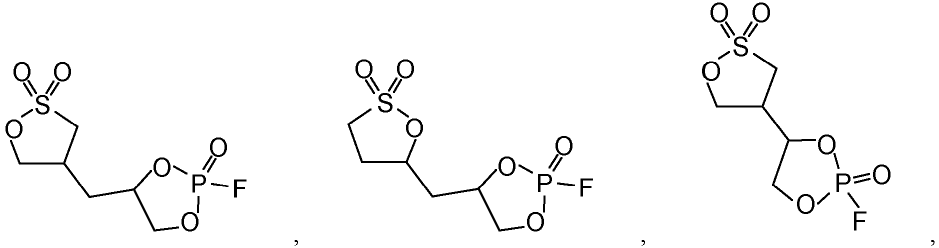

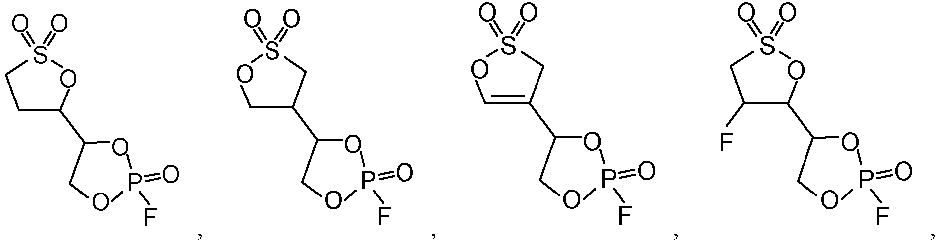

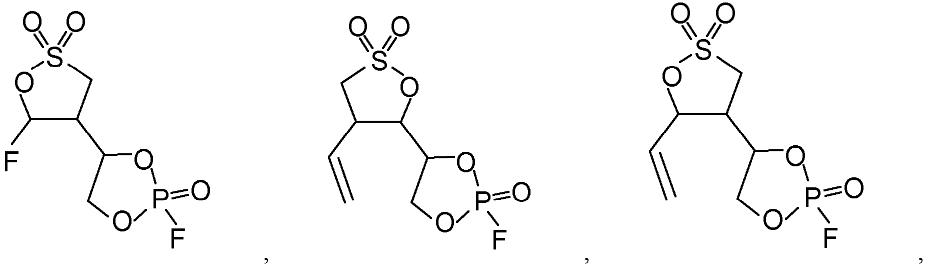

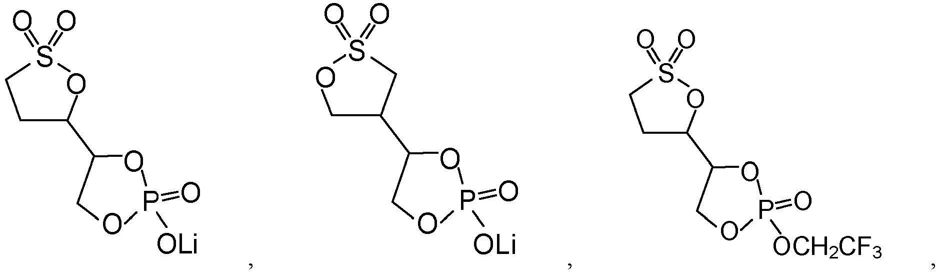

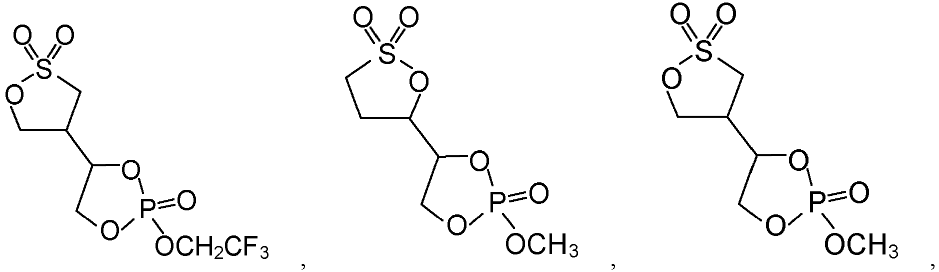

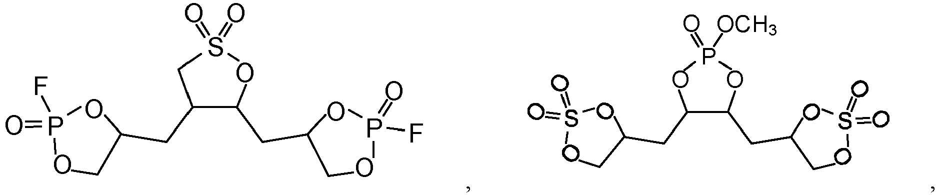

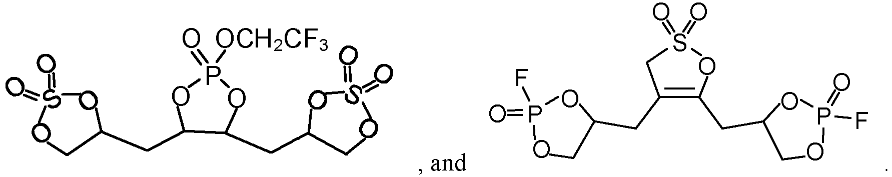

7. The electrolyte solution according to any one of claims 1 to 6, wherein the electrolyte solution further comprises a second additive, and the second additive comprises at least one of carbonate, sulfonate, sulfate, and phosphate.

8. The electrolyte solution according to claim 7, wherein the second additive comprises at least one of vinylene carbonate, difluoroethylene carbonate, fluoroethylene carbonate, vinyl ethylene carbonate, propane sultone, propenyl-1,3-sultone, ethylene sulfate, bis(ethylene sulfate), tris(2,2,2-trifluoroethyl)phosphate, triallyl phosphate, and lithium difluorophosphate.

9. The electrolyte solution according to any one of claims 1 to 8, wherein the electrolyte solution further comprises a third additive, and the third additive comprises at least one of SO₂ and CO₂.

10. The electrolyte solution according to claim 9, wherein a mass content of the third additive in the electrolyte solution is 10 ppm to 1000 ppm.

11. The electrolyte solution according to any one of claims 1 to 10, wherein the electrolyte solution further comprises a polymerization inhibitor, and optionally, the polymerization inhibitor comprises at least one of hydroquinone and 2,6-di-tert-butyl-p-cresol.

12. The electrolyte solution according to claim 11, wherein a mass content of the polymerization inhibitor in the electrolyte solution is less than 20 ppm, and optionally, the mass content of the polymerization inhibitor in the electrolyte solution is less than 10 ppm.

13. The electrolyte solution according to any one of claims 1 to 12, wherein the electrolyte solution further comprises a solvent, and the solvent has a relative dielectric constant greater than 2 and a viscosity less than 2 mPa·s at 25°C.

14. The electrolyte solution according to claim 13, wherein the solvent comprises at least one of carbonate, carboxylic acid ester, ether, sulfone, fluorocarbonate, fluorocarboxylate, fluoroether, and fluorosulfone.

15. The electrolyte solution according to any one of claims 1 to 14, wherein the electrolyte solution further comprises a metal salt, the metal salt comprises at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorooxalate borate, lithium bis(oxalato)borate, lithium difluorophosphate, lithium difluorobis(oxalato)phosphate, and lithium tetrafluoro(oxalato)phosphate, and optionally, the metal salt comprises at least one of lithium hexafluorophosphate and lithium bis(fluorosulfonyl)imide.

16. The electrolyte solution according to any one of claims 1 to 15, wherein an acidity value of the electrolyte solution is less than 800 ppm.

17. A battery, comprising the electrolyte solution according to any one of claims 1 to 16.

18. A power consuming apparatus, comprising the battery according to claim 17, wherein the battery is configured to supply electric energy.
